(19) **Europäisches Patentamt European Patent Office Office européen des brevets**

(11) **EP 1 547 020 B1**

(12) **EUROPEAN PATENT SPECIFICATION**

(45) Date of publication and mention
of the grant of the patent:
**27.08.2008 Bulletin 2008/35**

(51) Int Cl.:
***G06T 17/00*** *(2006.01)*

(21) Application number: **03771517.4**

(86) International application number:
**PCT/NO2003/000264**

(22) Date of filing: **31.07.2003**

(87) International publication number:
**WO 2004/012153 (05.02.2004 Gazette 2004/06)**

(54) **IRREGULAR MESH AND EMBEDDED GEOMETRIC DESCRIPTION IN A COMPUTER GRAPHICS SYSTEM**

IRREGULÄRES GEFLECHT UND EINGEBETTETE GEOMETRISCHE BESCHREIBUNG IN EINEM COMPUTERGRAPHIKSYSTEM

MAILLAGE IRREGULIER ET DESCRIPTION GEOMETRIQUE A PLONGEMENT DANS UN SYSTEME INFOGRAPHIQUE

(84) Designated Contracting States:
**AT BE BG CH CY CZ DE DK EE ES FI FR GB GR HU IE IT LI LU MC NL PT RO SE SI SK TR**

(30) Priority: **31.07.2002 NO 20023653**

(43) Date of publication of application:
**29.06.2005 Bulletin 2005/26**

(73) Proprietor: **Simsurgery AS**
**0855 Oslo (NO)**

(72) Inventors:
• **WESTGAARD, Geir**
**N-1412 Sofiemyr (NO)**
• **HALBWACHS, Yvon**
**N-0764 Oslo (NO)**

(74) Representative: **Robson, Aidan John**
**Reddie & Grose**
**16 Theobalds Road**
**London**
**WC1X 8PL (GB)**

(56) References cited:
**US-A1- 2001 006 387**

• **LEVY B ET AL: "Cellular Modeling in Arbitrary Dimension using Generalized Maps" CELLULAR MODELING, [Online] - 5 January 2001 (2001-01-05) XP002264334 Retrieved from the Internet: <URL:http://cvl.umiacs.umd.edu/users/ vikas /projects/enee631.doc> [retrieved on 2003-12-09]**
• **LANG VERONIQUE ET AL: "Simplicial sets and triangular patches" PROCEEDINGS OF THE 1996 14TH INTERNATIONAL CONFERENCE OF THE COMPUTER GRAPHICS SOCIETY, CGI'96; POHANG, SOUTH KOREA JUN 24-28 1996, 1996, pages 154-163, XP002264335 Proc Comput Graph Int Conf CGI;Proceedings of Computer Graphics International Conference, CGI 1996 IEEE, Los Alamitos, CA, USA**
• **DECORO CHRISTOPHER ET AL: "XFastMesh: Fast view-dependent meshing from external memory" VIS 2002, IEEE VISUALISATION 2002; BOSTON, MA, UNITED STATES OCT 27-NOV 1 2002, 2002, pages 363-370, XP002264336 Proc IEEE Visual Conf;Proceedings of the IEEE Visualization Conference 2002**

Printed by Jouve, 75001 PARIS (FR)

**Description**

FIELD OF THE INVENTION

The present invention relates generally to computer graphics, and topological and geometrical representation of 3-dimensional objects. More particularly the invention relates to description of objects using meshes.

BACKGROUND OF THE INVENTION

Representations of 3-dimensional objects in computer graphics are often based on the creation of some kind of mesh consisting of vertices connected by edges and faces. This mesh creates a frame upon which surfaces and texture can be superimposed. Such a model has two distinct, but interrelated, properties, namely the topology, which is a description of how the various vertices are connected by edges and faces, and the geometry, which is the position in space of the vertices and the shape of the surface superimposed on the mesh.

Boundary based representation of objects (B-rep) has been exploited for a number of years within such fields as Computer Aided Design (CAD), modeling of geological structures, and entertainment such as games and movies. B-reps represent objects by their boundaries. For example, a 3D cube is represented by its six faces, where the faces are tied together with some relationship information. An object is usually subdivided further, such that volumes, faces, edges and vertices are represented explicitly, along with the positional relationships between these entities. The various B-rep based topological representations differ in their level of subdivision, the relationships established between the topological elements, and how they distinguish between the topological model and the data embedded in this model, e.g. geometry.

Subdivision is a technique wherein a mesh is successively refined by repeated subdivision. A smooth surface is defined as the limit of a sequence of such refinements. Subdivision allows arbitrary topology, but the topology has not been explicitly defined in prior art solutions. One example of how topology has been handled is in the form of lists, and in order to e.g. find the neighbors of a given face in the mesh, it would be necessary to traverse the entire lists.

An alternative approach has been to use a regular mesh and associate a spline patch with each face. A refinement of this method, known as hierarchical B-splines, involves refining the mesh locally and adding smaller patches to the refined area. Again, this method lacks any explicit data model representing the topology.

Various representations can be chosen for the geometric entities embedded in the topological model. At a simplest level, straight lines are used to describe curves between vertices, and triangulation is used to create surfaces. However, it is desirable to represent free-form surfaces. A well-known way of doing this is to use surface splines as described e.g. in Jörg Peters, Biquadratic C1-surface splines over irregular meshes, Computer Aided Design Volume 27 Number 12, December 1995, pp. 895-903, 1995.

A B-spline is a smooth free-form surface defined by a set of mxn control vertices in a regular mesh. A complex surface can be constructed by creating a mesh of control vertices. In order to reduce the number of control vertices necessary for representing a surface with a number of local changes or deformations, a method of using hierarchical B-splines is known from David Forsey, Hierarchical B-splines, published on the Internet athttp://www.cs.ubc.ca/nest/imager/contributions/forsey/dragon/hbsplines.html. This technique consists of adding a B-spline patch to the region around the deformation, necessitating the addition of control vertices only to this patch.

Bruno Levy and Jean-Laurent Mallet, Cellular Modeling in Arbitrary Dimension using Generalized Maps, pp 1-11, 05.01.2001, describes how Generalized Maps, which will be described below, can be used to represent the topology of a geometric model also containing a geometrical description.

Veronique Lang and Pascal Lienhardt, Simplicial Sets and Triangular Patches, Proceedings of Computer Graphics International, pp 154-163, 24.06.1996, combines simplicial sets, a subset of Generalized Maps, with triangular Bezier patches.

SUMMARY OF THE INVENTION

Common to the prior art solutions is that they do not provide an effective data structure that allows efficient interaction between objects, and dynamic change of topology and geometry as a result of such interactions. The present invention aims at providing a method and a data structure that facilitates fast and efficient local interaction between 3D-objects, and fast and efficient local refinement or local deformation of the 3D-object descriptions.

The present invention is based on the use of generalized maps (G-maps) in order to describe the mesh topology, and on a smooth geometric description of the surface superimposed on this mesh.

Generalized maps (G-maps) is a type of generalized boundary representation model where the basic topological element of the topological map is the dart, a semi edge of a graph. A map is defined by a set of darts, D, and a set of involutions $(\alpha_0, \alpha_1, ..., \alpha_n,)$. Each involution "$\alpha_i$" describes the links between darts corresponding to a dimension "i". In 3-dimensional space, these relationships are used to subdivide an object into topological volumes ($\alpha_3$), a volume into topological faces ($\alpha_2$), a face into topological edges ($\alpha_1$), and an edge into topological vertices ($\alpha_0$).

Spatial representation of a 3-dimensional topological map consists in associating geometric entities with cells. Points in space are associated with vertices (0-cells), curve arcs are associated with edges (1-cells), surfaces are associated with faces (2-cells), and geometric volumes are associated with topological volumes (3-cells). These associations constitute the embedding of geometrical data in the topological map.

The n-dimensional G-map is expressed as

$$G = (D, \alpha_0, \alpha_1, \ldots, \alpha_n)$$

where D is a finite set of darts, and $\alpha_0 \ldots \alpha_n$ are $n+1$ involutions on D. An involution is a set of darts couples and/or singles. In the 3-dimensional case, the darts are used as follows:

$\alpha_0$ creates edges by linking darts of adjacent vertices;
$\alpha_1$ connects face edges by linking darts that meet in common vertices;
$\alpha_2$ connects surfaces by linking darts that constitute a common edge;
$\alpha_3$ connects volumes along a common face by linking darts that constitute the common face.

According to a first aspect of the invention, there is provided a method for describing a 3D-object using a mesh based geometric model where the topology of the description is described using G-maps and the geometry is based on coordinates in space associated with the vertices of said mesh.

One way of creating the geometry description is to repeatedly apply a subdivision algorithm until a sufficiently smooth surface has been applied.

For an example of subdivision algorithms, reference is made to E. Catmull and J. Clark, Recursively generated B-spline surfaces on arbitrary topological surfaces, Computer-Aided Design 10(6):350-355, November 1978.

A preferred way of creating the geometric description, however, is based on the creation of a refined inner mesh by applying a subdivision algorithm once, and using the vertices of this second mesh for the creation of surface patches associated with the first mesh.

In a preferred embodiment of the invention, this is done by dividing each face into quads by defining a point in the middle of the face and defining points that divide each edge in two. Drawing lines from the new face point and down to each new edge point will subdivide the face into only rectangular quads. A smooth surface can then be created e.g. by associating a Bezier-spline patch with each quad.

In order to create local refinement or distortion of the described geometric model, each quad can be subdivided further. According to the invention this is handled by creating a new G-map description for the topology of the subdivided quads and linking this to the previous level in a hierarchical manner. Additional geometric patches are then associated with the quads of the new topological level in the same manner as the original patches were associated with the quads of the original topological level. The invention allows for any number of refinement levels to be added on top of each other hierarchically.

It should be noted that in the above description the difference between topology and geometry is not made explicit. The faces are topological objects, and thus they do not have any geometrical midpoint. To the extent that geometrical coordinates are calculated they are stored in a geometrical model embedded in the topological model.

The various references between objects in the data structure can be implemented in a number of ways. According to a preferred embodiment, two darts that are linked by an $\alpha_1$ involution will define one corner of a quad, and reference to that quad will then be made through these darts. In the same way, reference from one hierarchical level of the topology to another is made through darts linked by a $\gamma$ link. Since the topological levels of this hierarchy will represent finer or coarser mesh structures, the reference from a dart on one level to a dart on a finer level will be referred to as $\gamma_{\text{fine}}$, while a reference from a dart on a finer level to a dart on a coarser level will be referred to as $\gamma_{\text{coarse}}$. It should be realized that while the $\alpha$ involutions allows navigation through one G-map structure, a $\gamma$ link results in a move from a G-map on one hierarchical level to a G-map on a higher or lower hierarchical level.

In this manner it will be easy to navigate through the topological structure simply by applying the various $\alpha$-involutions and check references to quads and/or their corresponding geometrical patches.

In addition to the method of creating a description of the topological and geometrical structure, the invention also covers the data structure resulting from this method.

Another aspect of the invention is a computer system programmed in a manner suitable for generating or changing a description or a data structure according to the invention based on suitable input data representing 3-dimensional objects.

Yet another aspect of the invention is a computer program product which, when installed on a suitable computer, enables the computer to generate a description or a data structure according to the invention, based on suitable input data representing 3-dimensional objects.

DESCRIPTION OF THE DRAWINGS

A preferred embodiment of the invention will now be described with reference to the drawings, where:

Figure 1          is an illustration of the subdivision of a model into cells;

Figure 2          is an illustration of a 2G-map and corresponding topology and possible geometry;

Figure 3          is an illustration of a 2G-map and corresponding topology and possible geometry, showing the 3D properties of the model;

Figure 4          shows a data structure holding the information of the G-map and the embedded geometry;

Figure 5          shows how geometry can be linked with the topology of the G-map shown in figure 2;

Figure 6          illustrates refined mesh, patch structure and patching submesh;

Figure 7          illustrates how an additional level of topology and geometry can be added in order to create local refinement;

Figure 8          illustrates an additional level of topology covering two patches of the original mesh;

Figure 9          illustrates various cases of available inner mesh control points;

Figure 10        shows refinement of a spline used in regular mesh areas;

Figure 11        shows refinement of a spline used in irregular mesh areas;

Figure 12        shows a data structure for several refinement levels of the topology and geometry;

Figure 13        lists input for a single level mesh;

Figure 14        lists input for a mesh where two patches have been subject to local refinement by the addition of one more level;

Figure 15a-f    shows screenshots of a 3D object that is being refined in accordance with the invention.

DETAILED DESCRIPTION OF THE INVENTION

The present invention is based on the use of generalized maps (G-maps) applied to the field of computer graphics. The theoretical structure of a G-map forms the basis for a description of a topological mesh which is associated with an embedded geometry. The following description will introduce the G-map structure and give examples of how this structure can be implemented as a data structure in a computer graphics system. These are intended as non-limiting examples, and those skilled in the art will realize that implementation details regarding the actual methods and data structures are possible and are intended to be covered within the scope of the invention.

The invention is particularly suited to represent 3D models in a computer graphics system where the computer system includes at least one processor which in combination with computer program code means and the various storage and graphics means of the computer is capable of constructing the model based on input data received over an input interface of the computer. The input data may include at least topological data representing vertices and faces of a mesh and geometrical data representing coordinates to be associated with the vertices, as described in further detail below. In a preferred embodiment of the invention the processing means of the computer system in combination with computer program code will constitute the various means of a system operating in accordance with the invention.

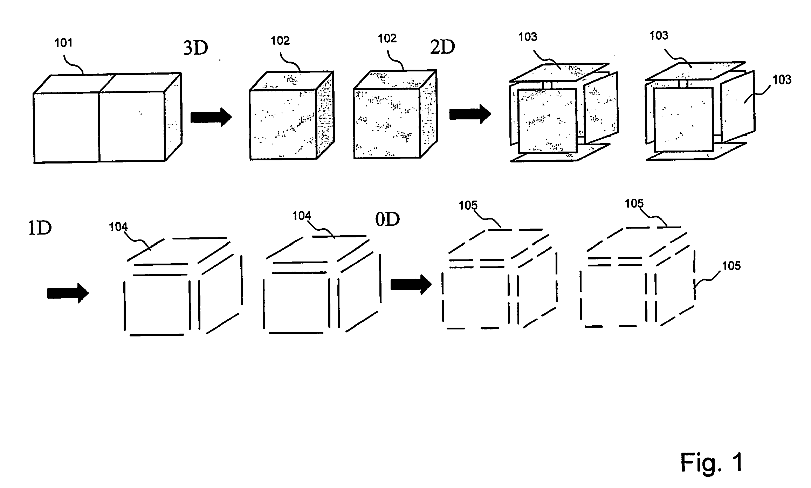

FIG. 1 illustrates how a 3D model can be divided into volumes, faces, edges and vertices. A 3D model 101 is subdivided into two volumes 102. These are again subdivided, each into six faces 103, representing each side of the two volumes 102. Then each face is subdivided into four edges 104. Finally, each edge is subdivided into two half-segments, each of which will be referred to as a dart 105. Each dart is associated with exactly one vertex, one edge, one face and one volume, also referred to as 0-cells, 1-cells, 2-cells and 3-cells respectively. It should, however, be noted that it is not necessary to represent all these cells explicitly in the data structure describing the G-map topology. As described bellow, the preferred embodiment of the invention does not include an explicit representation of edges. Edges are found by using functions operating on the darts. Likewise, the preferred embodiment described herein does not include explicit representations of volumes. The invention does not, however, prevent such descriptions from being included.

A generalized map of dimension $n \geq 0$ is a graph $G = (D, \alpha_0, \alpha_1, \ldots, \alpha_n)$, that consists of a non-empty, finite set of darts, D, and n+1 involutions $\alpha_i$ on D. The involutions create associations between darts in a manner that define the topology of the graph. A more detailed description is given in Y. Halbwachs and Ø. Hjelle, Generalized maps in geological modeling: Object-oriented design of topological kernels, In H. P. Langtangen and A. M. Bruaset and E. Quak, editors, Advances in Software Tools for Scientific Computing, pages 339 - 356, Springer, 1999.

A G-map may in principle have any number of dimensions, but in computer graphics the most relevant is the 3-dimensional case, and the following exemplary description will be limited to that. A person skilled in the art will realize that the invention may be modified to other numbers of dimensions if that should prove convenient as a design option.

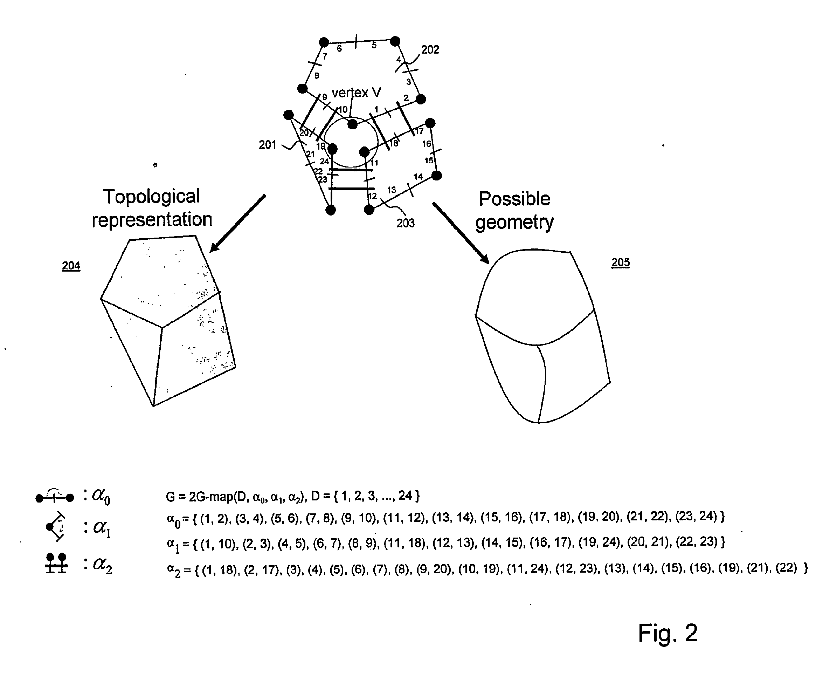

FIG. 2 illustrates how the topology of three faces 201, 202, 203 is described using G-maps. The G-map, G, is a set of darts D and involutions $\alpha_i$, in this case

$$G = 2G\text{-map}(D, \alpha_0, \alpha_1, \alpha_2),$$

$$D = \{ 1, 2, 3, \ldots, 24 \}$$

$$\alpha_0 = \{ (1, 2), (3, 4), (5, 6), (7, 8), (9, 10), (11, 12), (13, 14), (15, 16), (17, 18), (19, 20), (21, 22), (23, 24) \}$$

$$\alpha_1 = \{ (1, 10), (2, 3), (4, 5), (6, 7), (8, 9), (11, 18), (12, 13), (14, 15), (16, 17), (19, 24), (20, 21), (22, 23) \}$$

$$\alpha_2 = \{ (1, 18), (2, 17), (3), (4), (5), (6), (7), (8), (9, 20), (10, 19), (11, 24), (12, 23), (13), (14), (15), (16), (19), (21), (22) \}.$$

The involutions are sets of couples and singles. A couple $(d_i, d_j)$ in the set $\alpha_k$ is equivalent to $\alpha_k(d_i) = d_j$ and $a_k(d_j) = d_i$, while a single (d) is equivalent to $\alpha_k(d) = d$.

As can be seen from FIG. 2, couples belonging to the $\alpha_0$ involution join together two darts belonging to different vertices. Such a couple of darts then define an edge between two vertices of the graph. It can also be noted that since each dart is associated with only one face, the edge between two adjacent faces will be implicitly defined twice, except at the edge of a surface, where there is no bordering face.

Couples belonging to the $\alpha_1$ involution join together two darts belonging to the same vertex. This is where two face edges are joined together. It will be realized that by repeatedly invoking $\alpha_0$ and $\alpha_1$ involutions, it is possible to travel along the boundary of a face. A single in the $\alpha_1$ set would represent an extreme vertex that defined the end of a line or edge.

Couples belonging to the $\alpha_2$ involution join darts that belong to the same edge but to different faces. These couples define the relationship between adjacent faces. Invoking an $\alpha_2$ involution makes it possible to go from one face to its neighbor. Singles in the $\alpha_2$ set indicates that there are edges that do not separate two faces, in other words, edges along the boundary of the mesh. It will be realized that e.g. a 2-G-map representation of a sphere as connected triangles will not have any singles.

It would be possible, but not necessary, for a 3D representation, to include $\alpha_3$ involutions in order to represent adjacent volumes. The couples belonging to the $\alpha_3$ set would then represent darts that belong to the same face, but adjacent volumes. Singles in the $\alpha_3$ set would represent darts around the boundary of faces that represent the surface of the 3D model. Returning to FIG. 1, the two volumes 102 would be joined together by $\alpha_3$ couples along the edges of the two surfaces facing each other.

An orbit of a dart d is the set of all darts in a G-map that can be reached by applying a subset of the involutions in the G-map, starting with d. It has already been mentioned that repeated application of $\alpha_0$ and $\alpha_1$ will define the boundary of a face. This is referred to as the 2-orbit. For 2-G-maps, the 0-orbit $(\alpha_1, \alpha_2)$ is the set of darts incident to a vertex, the 1-orbit $(\alpha_0, \alpha_2)$ is the set of darts incident to an edge, and the 2-orbit $(\alpha_0, \alpha_1)$ is the set of darts incident to a face.

Also shown is the topological representation 204 of the G-map, and a possible geometry 205. The geometry depends on the embedded geometric description, as described below.

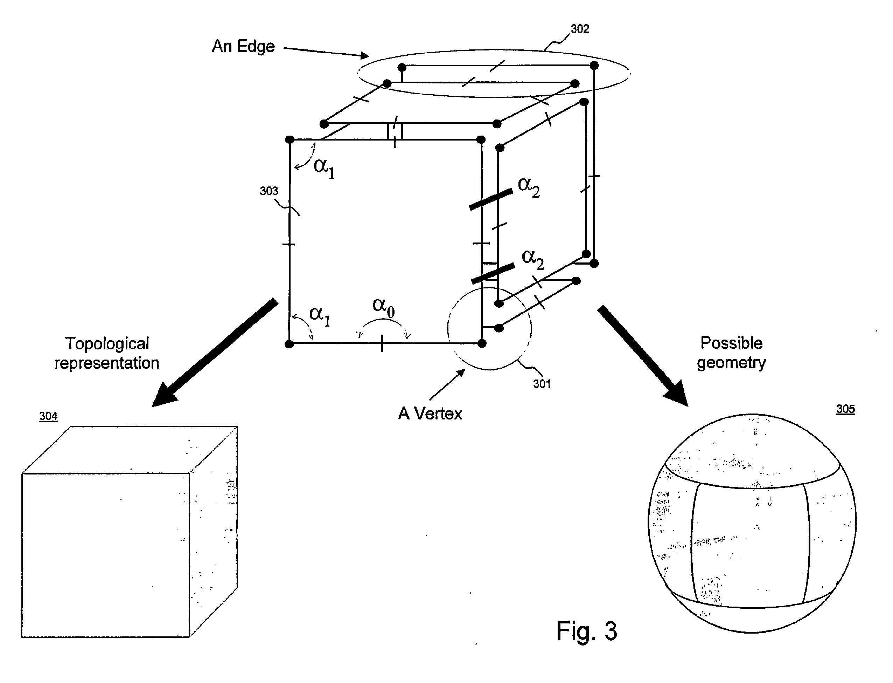

FIG. 3 is another example of a simple volume with a topology that is described using G-maps. The topology comprises vertices 301, edges 302 and faces 303. In this example, the topology of the volume is that of a cube 304, while it is illustrated that the geometry could for instance actually be that of a sphere 305. Again it is shown how $\alpha_0$ involutions link darts together to create the edges, $\alpha_1$ involutions link edges together at each vertex of the mesh, and $\alpha_2$ involutions tie various faces together by linking darts that belong to the same edges but adjacent faces. It should be noted that it would be possible to leave out one of the faces in order to describe an object with the topology of an open box with five sides. The $\alpha_2$ involutions of the darts along the rim of the opening would then refer to the dart itself, since there would be no adjacent face.

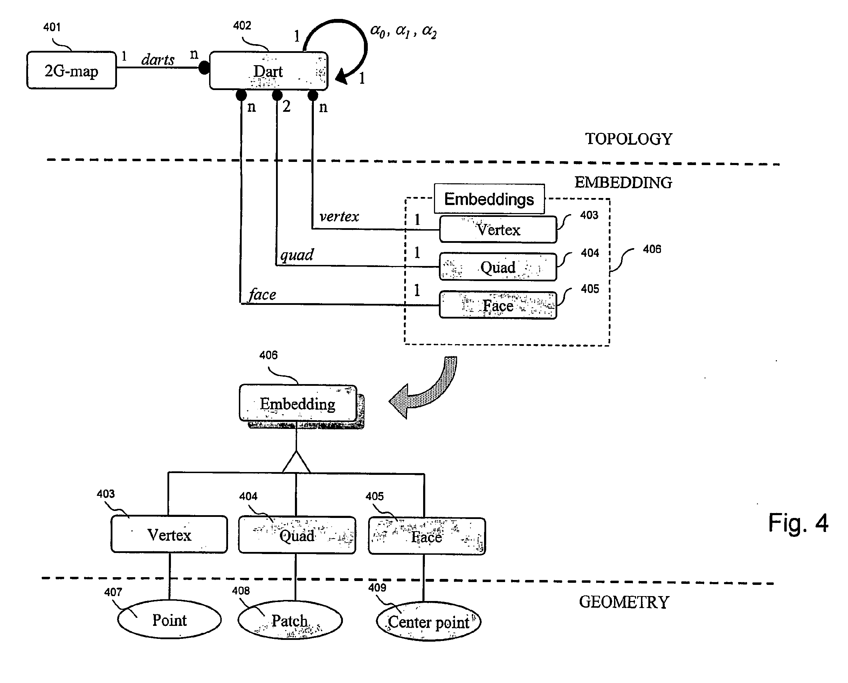

Reference is now made to FIG. 4, which illustrates in a UML diagram a data structure according to a preferred embodiment of the invention. In an object oriented programming language such as C++, the vertices, darts and faces would preferably be defined as classes/objects, while e.g. edges and volumes are defined only implicitly. Also, while some relationships are explicitly defined through the use of pointers, others are defined only indirectly and can be found by examining the value of several pointers. However, it would be possible to structure this differently. Other choices could be made for which definitions that should be made explicit and which should be implicit. Information that is presented here as included in one class of objects could be included in other classes of objects. Also, additional classes of objects that tie objects together could be included, so that e.g. pointers that here are presented as referencing other objects directly may do so only indirectly. It would even be possible to implement the data structure of the invention in a programming language that is not object oriented. The skilled person will realize that it is the exploitation of the G-map data structure in a mesh based geometry, rather than the expression of this data structure in any particular programming language, that represents one of the central ideas behind the invention.

For every G-map structure 401, there will be an arbitrary number of darts 402. As already described, the darts will reference each other by way of $\alpha$-involutions. The $\alpha$-involutions may be implemented as pointers in each dart-object in an object oriented programming language.

The geometry is embedded in the topology. According to a preferred embodiment, this is done by way of three additional objects: vertices 403, quads 404, and faces 405. A vertex 403 is the topological representation of a 0-orbit in the mesh. A vertex can be referred to by any number of darts, but each dart will refer to only one vertex. These references can be implemented as a pointer in each dart, pointing to the associated vertex, one or more pointers in each vertex, pointing to the associated darts, or both.

In the same way, a face is the topological representation of a single mesh cell. A face is surrounded by a loop of darts that are tied together by alternating $\alpha_0$ and $\alpha_1$-involutions. Again, each dart will be associated with only one face, while each face may be associated with an arbitrary number of darts. The pointers may again be implemented in the dart objects, in the face objects, or in both.

It should be noted that it is sufficient to include one pointer from a face object to one of the associated darts, since the remaining darts can be found as the referenced dart's 2-orbit. In the same way it is sufficient to include only one pointer from a vertex to a dart, since the remaining darts can be found as the referenced dart's 0-orbit.

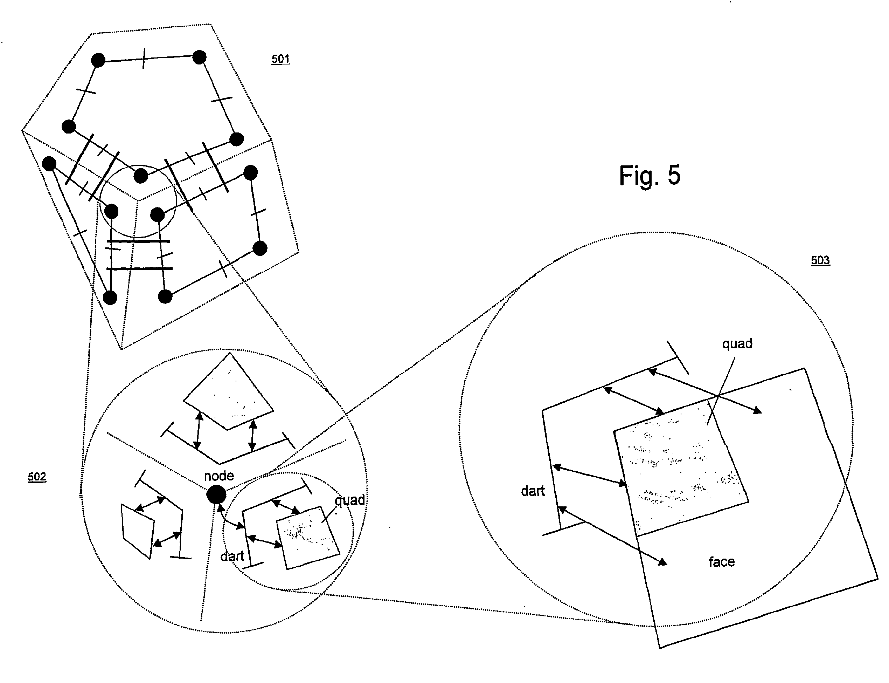

Quads represent rectangular sections of each face. As will be described in greater detail with reference to FIG. 5, there can be an arbitrary number of quads to a face, but there will be only one vertex and two darts for each quad. According to a preferred embodiment of the invention, there is no explicit reference between vertices and quads (or indeed between any of the embedded objects), but each quad refers explicitly to two darts (actually to one, the other is found through an $\alpha_1$-involution), and each dart refers to one quad.

According to a preferred embodiment of the invention, an embedding 406 is a class from which the various embedded objects inherit certain characteristics. In addition, the embedded objects will have additional characteristics depending on what kind of objects they are: Each vertex 403 will be associated with a variable holding the coordinates of a point in space 407, each quad 404 will be associated with a description of a surface patch 408, and each face will be associated with a variable holding the coordinates of a center point 409 of the face. According to a preferred embodiment it is the center point of a refined inner mesh that is stored as this center point 409, as will be described below.

The various variables and functions that describe geometry are preferably included as native to the embedded objects. However, they could also, as a matter of design choice, be located in separate objects that are pointed to by the embeddings, or in any other manner.

It should be noted that in the case where the G-map topology is used to describe a mesh that will be subdivided repeatedly and not associated with surface descriptions, the quad/patch and face/center point may be left out. One of the main advantages of the invention, i.e. the topology description that can be quickly navigated in order to implement local refinement or distortion, will still be achieved.

According to this exemplary embodiment, there are no objects that explicitly define edges. However, all the darts incident to an edge can be found as the 1-orbit of one of the darts incident to the edge. Also, according to this embodiment, there are no embedded objects that describe volumes, and there are no $\alpha$-involutions above $\alpha_2$. It should be noted, however, that the principles of the invention are not limited in this way, and that any number of dimensions could be included in principle.

Whether the data structure described is created as objects including pointers and algorithms, or through some other means, it will include a number of data structures that represent the various parts of a G-map mesh and the references, or associations, between these parts. The data structures will preferably be stored in a computer memory for access by a data processing system.

FIG. 5 shows in more detail how quads are derived from faces and associated with darts. In a first level of detail 501, the mesh of FIG. 2 is shown. In a second level of detail 502, the darts associated with one of the vertices of this mesh are shown, along with the quads associated with these darts. Finally, in a third level of detail 503, two darts are illustrated along with one quad, and the face of which it is part.

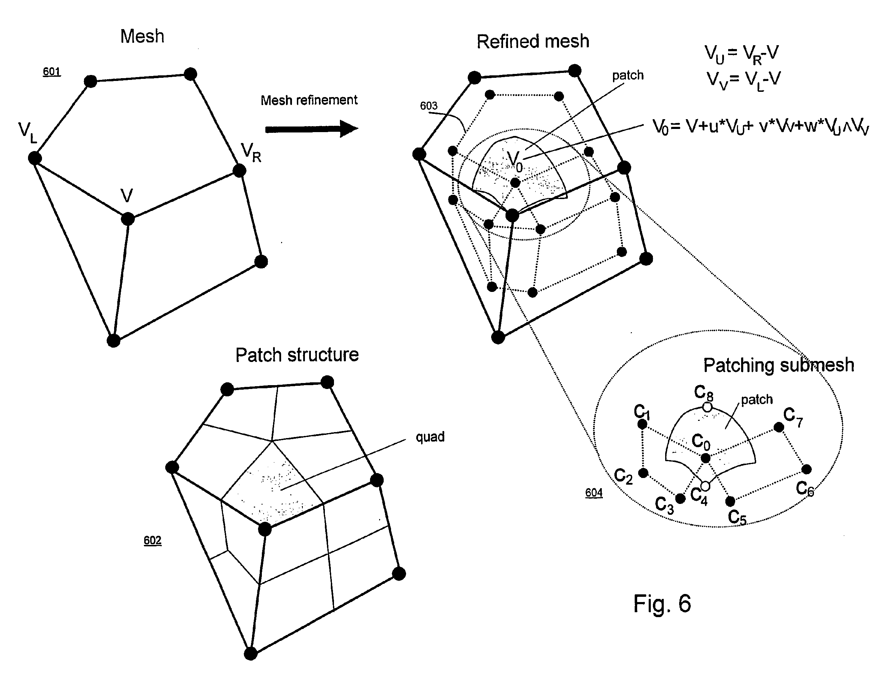

The quads of a face are, according to a preferred embodiment of the invention, found using midpoint refinement. This method is described with reference to FIG. 6 below. It should be noted that if the embedded geometry is described using repeated subdivision, quads are not necessary.

Each quad will be associated with one or both of the darts, as already described. It is not necessary to associate the quad with the face, since they will be linked through a common dart.

It should be noted that even if the face is linked to only one of the surrounding darts by a pointer in the face object, all the associated quads can be found by finding the 2-orbit of the dart pointed to by the face, and collecting all the quads pointed to by the darts in this orbit.

FIG. 6 illustrates in greater detail how the quads are constructed, and how a refined mesh is constructed from the first mesh.

The construction of quads described with reference to FIG. 5 and the subsequent association with a patch geometry, corresponds with what is known in the art as midpoint refinement. This is a method that is well known in the art, reference is made to Jörg Peters, Biquadratic C1-surface splines over irregular meshes, Computer Aided Design Volume 27 Number 12, December 1995, pp. 895-903, 1995. Midpoint refinement is based on inserting points at the centroid of each mesh cell and the midpoint of each cell edge. This results in a refined structure of quadrilateral sub cells, and these are what we refer to as quads. Starting with the mesh 601, we get the patch structure 602.

From the original mesh 601, a refined mesh 603 is created. This is done by applying a mesh refinement algorithm to the original mesh. One such algorithm is illustrated in FIG. 6. For every quad in the original mesh a new vertex is found based on each original vertex and the two neighboring vertices. The coordinates (positions) to be associated with each vertex in the new mesh is then found as

$$V_0 = V + u*V_U + v*V_V + w*V_U \Lambda V_V \qquad\qquad (1)$$

Where
u, v and w are coefficients that represent local shape parameters,

$$V_U = V_R - V$$

$$V_V = V_L - V .$$

and V, $V_L$ and $V_R$ are the positions associated with the original vertex, and the vertices to the left and right of this in the original mesh, respectively. The vertex $V_0$ and the coefficients u, v, w, are preferably stored in the corresponding quad.

The resulting vertices of the refined mesh are used as control points when the shape of each patch is found.

However, the refined mesh will not provide all the necessary control points for constructing a surface spline patch. This is illustrated in a detailed view 604 of the patching submesh. The Vertex $V_0$ gives the control point $C_0$, and other vertices of the refined mesh found in the same way but based on another set of vertices of the original mesh, yield the control points $C_1$, $C_2$, $C_3$, $C_5$, $C_6$, and $C_7$. Preferably, $C_8$ is the average of the points surrounding the face of the inner mesh, and according to a preferred embodiment of the invention, this is also the point that is stored as the center point of the face described above. In the same way, $C_4$ can be found as the average of the inner mesh vertices that have been based on one point V of the outer mesh.

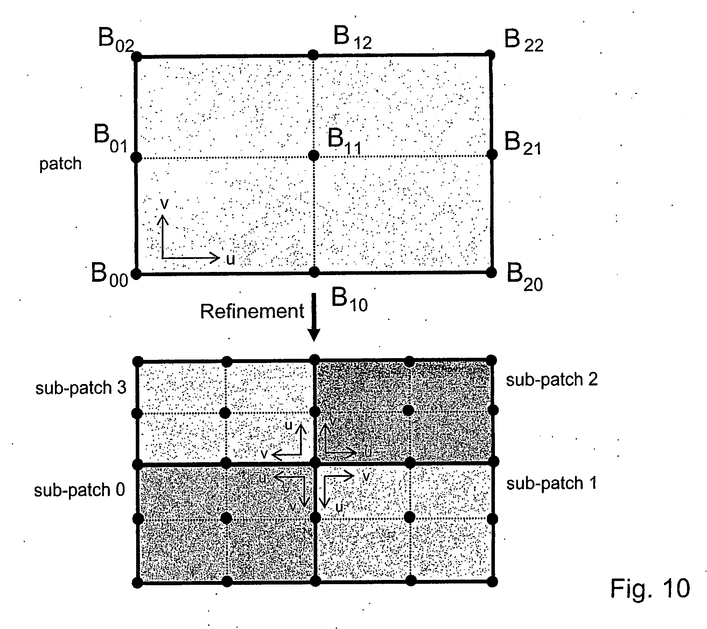

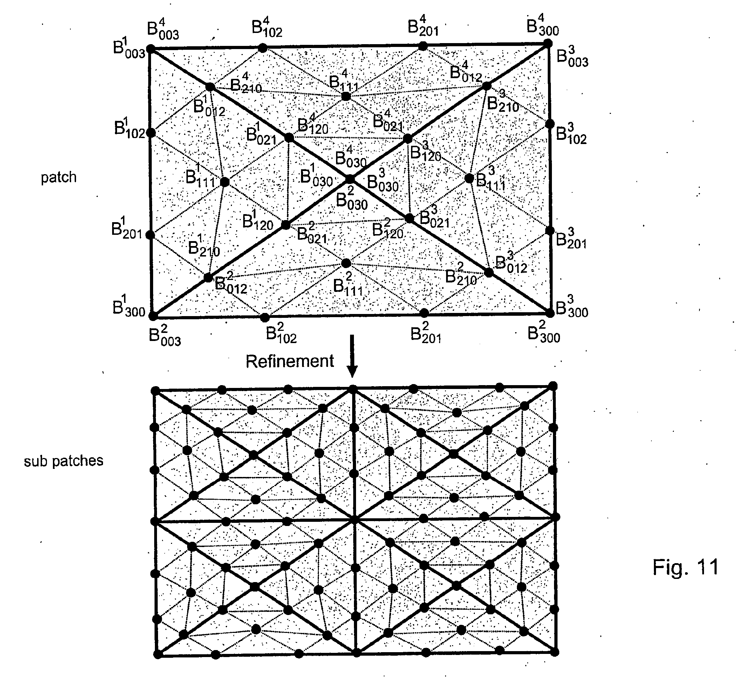

The C-control points will be used to generate the Bezier control points that determine the actual shape of each patch. This will be described in greater detail with reference to FIG. 10 and FIG. 11.

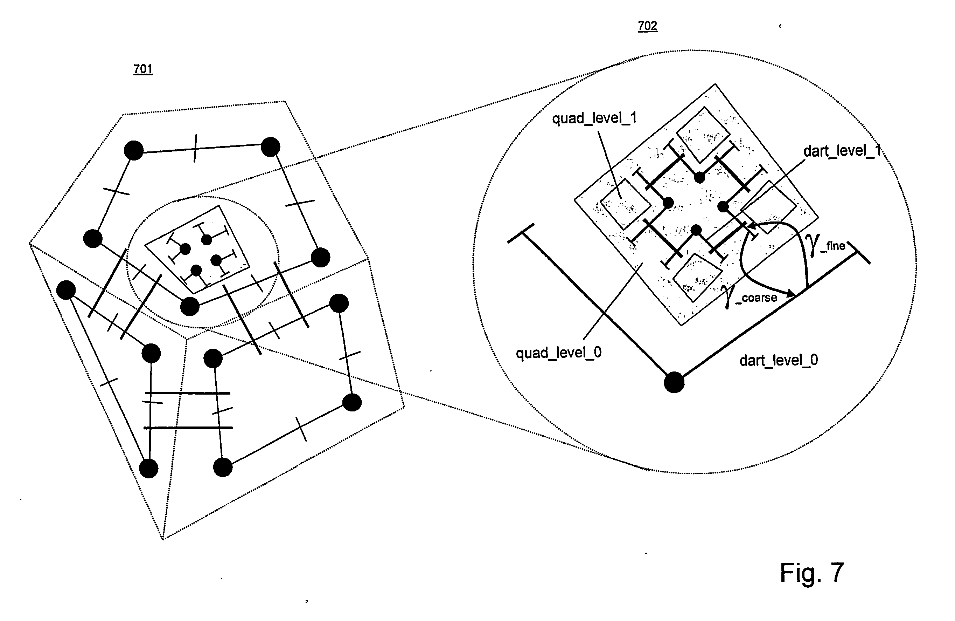

Turning now to FIG. 7, local refinement of the model will be described. The description is based on the preferred embodiment using midpoint refinement in order to find a patch structure and creating surface spline patches. However, other embodiment are within the scope of the invention, e.g. using subdivision in order to create the smooth surfaces. Subdivision could e.g. be used independently for the coarse mesh and for the local refined mesh.

Again the mesh of FIG. 2 is shown at a first level of detail 701, while at a second level of detail 702, a pair of darts and an associated quad are shown. This quad is again subdivided into a second level of detail, and on this second level a new G-map is created. Hence, there is one G-map for each level.

The first level G-map, or level 0, comprises a dart_level_0 and a quad_level_0, with all the properties already described. The second level G-map, level 1, comprises a vertex, eight darts and four quads. The darts are associated with each other in pairs by $\alpha_1$-involutions, and each such pair of darts on dart_level_1 span out one of the four quads on quad_level_1. In addition, each quad is associated with neighboring quads through $\alpha_2$-involutions that tie together neighboring darts. Each level 1 quad includes three coefficients u, v, w and the coordinates of a refined level 1 inner mesh vertex $V_0$, found by the same method as that already described for level 0. The 3D point associated with the level 1 vertex will be taken from the $V_0$ vertex stored in the corresponding level 0 quad (quad_level_0).

The eight darts are associated with each other as described above. However, they will not necessarily include references to adjacent quads in the form of $\alpha_0$ involutions, unless the refinement extends over neighboring quads, as described below. Consequently there may be no level 1 face that are part of the level 1 G-map.

Furthermore, the reason for creating the second level of detail that G-map level 1 represents could be the result of interaction between several objects. If e.g. an object is hit by another object somewhere inside a quad, causing a deformation, the vertex for this second level G-map, and possibly other vertices in the G-map, may be manipulated directly, and the various values will no longer be derived from the coarser level G-map.

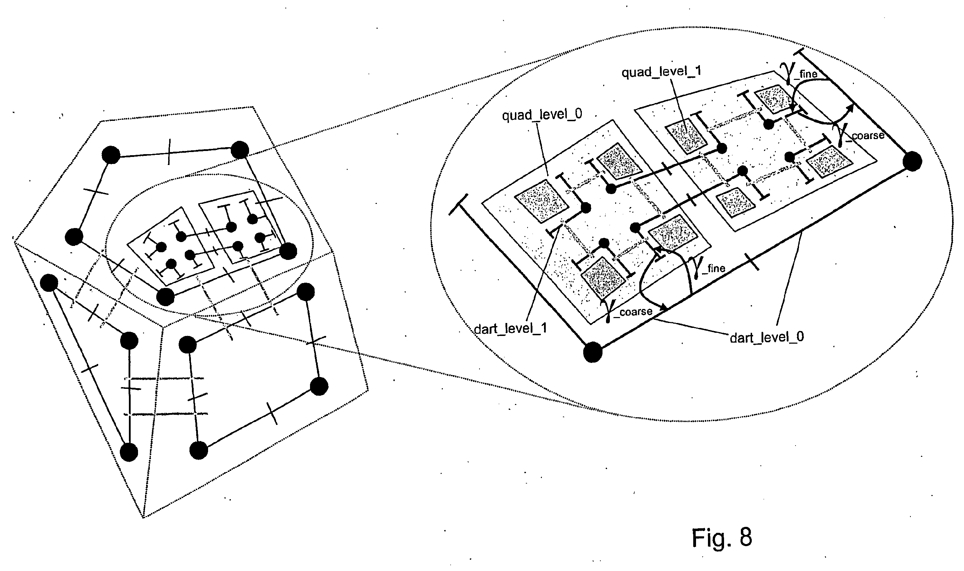

Second, it should be noted that as long as the refinement does not extend beyond the original quad, none of the darts on dart_level_1 will be linked with other darts by $\alpha_0$-involutions, and hence there will be no complete 2-orbit and therefore no face associated with any of these darts. However, if the refinement does extend beyond one quad, the second level G-map will include darts that are created in the adjacent quads, and they will be linked with $\alpha_0$-involutions across the quad boundaries, as shown in FIG. 8.

Finally it should be noted that it will be necessary to be able to navigate from a G-map on one level to a G-map on another level - finer or coarser. This is done by adding what will be referred to as $\gamma$-links as pointers from darts on one dart level (belonging to one G-map) to associated darts on another dart level (belonging to another G-map). Preferably, this is done by adding pointers to the dart objects. One pointer, $\gamma_{\_fine}$, points to a dart on the next finer level, and one pointer, $\gamma_{\_coarse}$, points to a dart on a coarser level. It is not, however, necessary to add these pointers to every dart object. When going from a coarser level to a finer level, it is sufficient to have a pointer from one of the two darts that are associated with the patch that is refined. If one dart does not contain such a reference, the other dart, found by applying an $\alpha_1$-involution, will. Similarly, when going from a finer to a coarser level, it is sufficient to search the darts of the 0-orbit around a vertex in order to find the dart that contains a reference to the coarser level.

FIG. 8 shows local refinement similar to that of FIG. 7, but where the refinement involves two adjacent patches of the first, coarser mesh. It can be seen that the exact same procedure is followed, with the only difference that darts are linked across patch boundaries. It will also be noticed that there are still no complete $\alpha_2$-orbits, so the finer mesh does not include any faces.

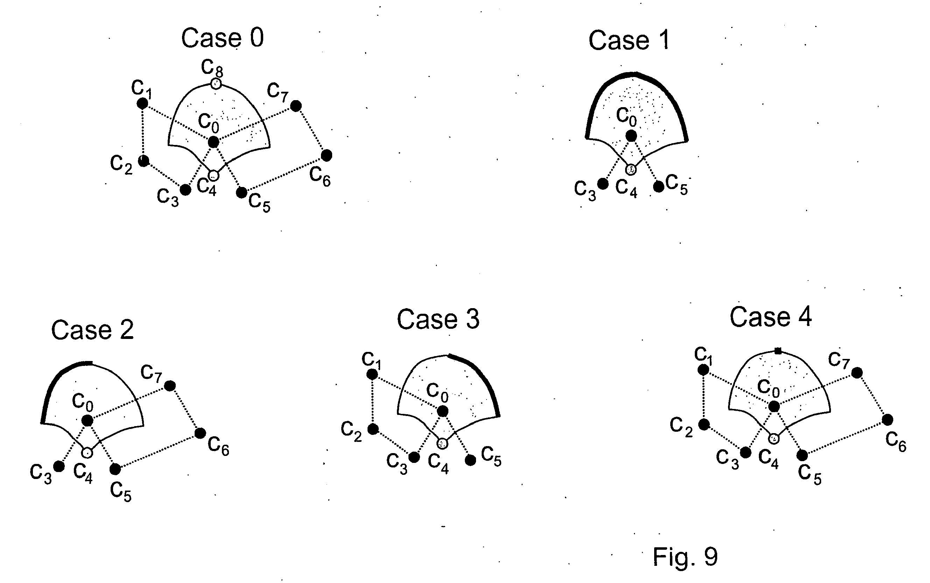

FIG. 9 is an illustration of the various cases that may occur when constructing the surface spline patches form control points found in an inner mesh. As described with reference to FIG. 6, the control points will be found as vertices in the inner mesh, or as averages of these, together with node valens (number fo faces around a node) and face valence (number of nodes around a face). However, in the case of local refinement, there will be a lot of border conditions where the G-map is incomplete, and where the inner mesh does not produce all these control points. However, since the aim is to construct smooth surfaces, the necessary information can be found from the coarser level G-maps. FIG. 9 illustrates five different cases, where case 0 represents the complete situation already described. Case 0 will also be the case for the first mesh level without any local refinement. The other cases represent situations where some of the control points cannot be found from the inner mesh of the G-map on the same level. The patch edges that follow the patch edges of the coarser level are in FIG. 9 shown as bold lines.

As mentioned above, the C-control points are not the Bezier control points (B-control points) used to actually compute the geometric shape of the patches. The B-control points are derived from the C-control points, and exactly how this is done may depend on the characteristics of the mesh where the patch is located.

FIG. 10 illustrates a bi-quadratic Bezier patch in a regular mesh area (node valence and face valence both equal 4). In this case it is sufficient with B-control points in each corner of the patch, halfway along each edge, and in the center of each patch. On the first mesh level of a totally regular mesh, all B-control points can be found from the C-control points. However, as already described, there will be cases where some of the C-control points are missing. Table 1 shows how the B-control points are derived from the C-control points in the cases illustrated in FIG. 9, as well as indicating which points are unavailable in this manner.

PATCHING REGULAR AREA QUADS

Table 1.

| Control points | Case 0 | Case 1 | Case 2 | Case 3 | Case 4 |
|---|---|---|---|---|---|
| $B_{00}$ | $C_4$ | as case 0 | as case 0 | as case 0 | as case 0 |
| $B_{10}$ | $(C_0+C_5)/2$ | as case 0 | as case 0 | as case 0 | as case 0 |
| $B_{20}$ | $(C_0+C_5+C_6+C_7)/4$ | -- | as case 0 | -- | as case 0 |
| $B_{01}$ | $(C_0+C_3)/2$ | as case 0 | as case 0 | as case 0 | as case 0 |
| $B_{11}$ | $C_0$ | as case 0 | as case 0 | as case 0 | as case 0 |
| $B_{21}$ | $(C_0+C_7)/2$ | -- | as case 0 | -- | as case 0 |
| $B_{02}$ | $(C_0+C_1+C_2+C_3)/4$ | -- | -- | as case 0 | as case 0 |
| $B_{12}$ | $(C_0+C_1)/2$ | -- | -- | as case 0 | as case 0 |
| $B_{22}$ | $C_8$ | -- | -- | -- | -- |

As can bee seen from table 1, all points can be found only in case 0. In the remaining cases there is not enough information in the inner mesh constructed from the refined G-map. This means that it will be necessary to find this information from the coarser levels, since the transition from the level i surface to the level i+1 surface should be smooth. As already mentioned, the patch edges that follow the patch edges of the coarser level are in FIG. 9 shown as bold lines. These are the edges for which B-control points are not available directly from the C-control points on the same level. For these edges information will be found on the coarser levels.

FIG. 10 illustrates how B-control points on a refined level correspond with control points on the coarser level. When a patch is refined, four new patches are created (sub-patch 0 - 3), each with the same control point pattern as the coarser level patch. Going from a coarser to a more refined pattern of control points is well known from Bezier and spline theory. A detailed description can e.g. be found in Gerald Farin, Curves and Surfaces for CAGD, 5th edition, Morgan Kaufman Publishing, 2001.

In areas where the mesh is irregular it is necessary to introduce more B-control points. The reason for this is the need for enough free variables in order to make the surface tangentially continuous. It would be possible to generate surfaces using the B-control points described above, but this would result in edges in the surface where a smooth surface is desired.

FIG. 11 shows an example of possible pattern of B-control points when the mesh is irregular, representing a preferred embodiment of the invention. In this case four cubic Bezier triangles are used to form a quad patch. The same principles apply in the sense that whenever possible, B-control points $B^1_{ijk}$ are derived from the C-control points of the inner mesh, while when this is not possible, the necessary information is found on the coarser levels.

Tables 2 - 5 give the formulas for each B-control point, where
nv = node valence        fv = face valence

**Sub patch 1:**

| Control points | Case 0 | Case 1 | Case 2 | Case 3 | Case 4 |
|---|---|---|---|---|---|
| $B_{003}^1$ | $(C_0+C_1+C_2+C_3)/4$ | -- | -- | as case 0 | as case 0 |
| $B_{102}^1$ | $25/12(C_0+C_3)+(C_1+C_2)/12$ | -- | -- | as case 0 | as case 0 |
| $B_{201}^1$ | $(C_4+C_0+C_3)/3$ | as case 0 | as case 0 | as case 0 | as case 0 |
| $B_{300}^1$ | $C_4$ | as case 0 | as case 0 | as case 0 | as case 0 |
| $B_{012}^1$ | $5/12C_0+(C_1+C_3)/4+C_2/12$ | -- | -- | as case 0 | as case 0 |
| $B_{111}^1$ | $((2.0-\cos(\frac{2\pi}{nv}))/2(C_0+C_3)+ (1+\cos(\frac{2\pi}{nv}))(C_0+C_1+C_2+C_3)/4 +C_4)/6+C_0/3$ | $(B_{102}^1+B_{201}^1+ (C_0-C_3)/3)/2$ | as case 1 | as case 0 | as case 0 |
| $B_{210}^1$ | $(C_4+C_0)/3+(C_3+C_5)/6$ | as case 0 | as case 0 | as case 0 | as case 0 |
| $B_{021}^1$ | $(C_0+C_1+C_2+C_3)/4+C_8+C_4)/12+ C_0/3$ $(((2.0-\cos(\frac{2\pi}{fv}))(C_0+C_1)/2+ (2.0-\cos(\frac{2\pi}{nv}))(C_0+C_3)/2) + (2.0+\cos(\frac{2\pi}{fv})+\cos(\frac{2\pi}{nv}))$ | $(B_{111}^1+B_{111}^4)/2$ | as case 1 | as case 0 | as case 0 |
| $B_{120}^1$ | $((2.0-\cos(\frac{2\pi}{nv}))(2C_0+C_3+C_5)/2 + (1.0+\cos(\frac{2\pi}{nv}))(2C_0+C_1+C_2+C_3+ C_5+C_6+C_7)/4)/12 +C_0/3+C_4/6$ | $(B_{111}^1+B_{111}^2)/2$ | as case 1 | as case 1 | as case 1 |
| $B_{030}^1$ | $(((2.0-\cos(\frac{2\pi}{fv}))(2C_0+C_1+C_7)/2+ (2.0-\cos(\frac{2\pi}{fv}))(2C_0+C_3+C_5))/2 + (2.0+\cos(\frac{2\pi}{fv})+\cos(\frac{2\pi}{nv}))(2C_0+C_1+ C_2+C_3+C_5+C_6+C_7)/4)/24+ C_0/3+ (C_8+C_4)/12$ | $(B_{111}^1+B_{111}^2+ B_{111}^3+B_{111}^4)/4$ | as case 1 | as case 1 | as case 1 |

**Sub patch 2:**

| Control points | Case 0 | Case 1 | Case 2 | Case 3 | Case 4 |
|---|---|---|---|---|---|
| $B_{003}^2$ | $C_4$ | as case 0 | as case 0 | as case 0 | as case 0 |

(continued)

| Control points | | Case 0 | Case 1 | Case 2 | Case 3 | Case 4 |
|---|---|---|---|---|---|---|
| $B_{102}^2$ | | $(C_0+C_4+C_5)/3$ | as case 0 | as case 0 | as case 0 | as case 0 |
| $B_{201}^2$ | | $5/12(C_0+C_5)+(C_6+C_7)/12$ | -- | as case 0 | -- | as case 0 |
| $B_{300}^2$ | | $(C_0+C_5+C_6+C_7)/4$ | -- | as case 0 | -- | as case 0 |
| $B_{012}^2$ | $B_{210}^1$ | | as case 0 | as case 0 | as case 0 | as case 0 |
| $B_{111}^2$ | | $((2.0-\cos(\frac{2\pi}{nv}))/2(C_0+C_5)+$ $(1+\cos(\frac{2\pi}{nv}))(C_0+C_5+C_6+C_7)/4$ $+C_4)/6+C_0/3$ | $(B_{102}^2+B_{201}^2+$ $(C_0-C_5)/3)/2$ | as case 0 | as case 1 | as case 0 |
| $B_{210}^2$ | | $(5/12C_0+(C_5+C_7)/4+C_6/12$ | -- | as case 0 | -- | as case 0 |
| $B_{021}^2$ | $B_{120}^1$ | | as case 0 | as case 0 | as case 0 | as case 0 |
| $B_{120}^2$ | | $(((2.0-\cos(\frac{2\pi}{nv}))(C_0+C_5)/2+$ $(2.0-\cos(\frac{2\pi}{fv}))(C_0+C_7)/2)+$ $(2.0+\cos(\frac{2\pi}{fv})+\cos(\frac{2\pi}{nv}))(C_0+C$ $_5+C_6+C_7)/4+C_4+C_8)/12+C_0/3$ | $(B_{111}^3+B_{111}^2)/$ $2$ | as case 1 | as case 1 | as case 1 |
| $B_{030}^2$ | $B_{030}^1$ | | as case 0 | as case 0 | as case 0 | as case 0 |

**Sub patch 3:**

| Control points | | Case 0 | Case 1 | Case 2 | Case 3 | Case 4 |
|---|---|---|---|---|---|---|
| $B_{003}^3$ | $B_{300}^2$ | | as case 0 | as case 0 | as case 0 | as case 0 |
| $B_{102}^3$ | | $5/12(C_0+C_7)+(C_5+C_6)/12$ | -- | as case 0 | -- | as case 0 |
| $B_{201}^3$ | | $(C_8+C_0+C_7)/3$ | -- | -- | -- | -- |
| $B_{300}^3$ | | $C_8$ | -- | -- | -- | -- |

(continued)

| Control points | | Case 0 | Case 1 | Case 2 | Case 3 | Case 4 |
|---|---|---|---|---|---|---|
| $B^3_{012}$ | $B^2_{210}$ | | as case 0 | as case 0 | as case 0 | as case 0 |
| $B^3_{111}$ | | $((2.0-\cos(\frac{2\pi}{fv}))(C_0+C_7)/2+$ $(1.0+\cos(\frac{2\pi}{fv}))(C_0+C_5+C_6+C_7)/4+$ $C_8/6+C_0/3$ | -- | $(B^3_{102}+B^3_{201}+$ $(C_0-C_7)/3)/2$ | -- | as case 2 |
| $B^3_{210}$ | | $(C_8+C_0)/3+(C_7+C_1)/6$ | -- | -- | -- | -- |
| $B^3_{021}$ | $B^2_{120}$ | | as case 0 | as case 0 | as case 0 | as case 0 |
| $B^3_{120}$ | | $((2.0-\cos(\frac{2\pi}{fv}))(C_0+C_7+C_0+C_1)/2+$ $(1.0+\cos(\frac{2\pi}{fv}))((2C_0+C_5+C_6+C_7+C_1+C_2+C_3)/4))/12+C_0/3+C_8/6$ | $(B^3_{111}+B^4_{111}$ $)/2$ | as case 1 | as case I | as case 1 |
| $B^3_{030}$ | $B^1_{030}$ | | as case 0 | as case 0 | as case 0 | as case 0 |

**Sub patch 4:**

| Control points | | Case 0 | Case 1 | Case 2 | Case 3 | Case 4 |
|---|---|---|---|---|---|---|
| $B^4_{003}$ | $B^3_{300}$ | | as case 0 | as case 0 | as case 0 | as case 0 |
| $B^4_{102}$ | | $(C_8+C_0+C_1)/3$ | -- | -- | -- | -- |
| $B^4_{201}$ | | $S/12(C_0+C_1)+(C_2+C_3)/12$ | -- | -- | as case 0 | as case 0 |
| $B^4_{300}$ | $B^1_{003}$ | | as case 0 | as case 0 | as case 0 | as case 0 |
| $B^4_{012}$ | $B^3_{210}$ | | as case 0 | as case 0 | as case 0 | as case 0 |
| $B^4_{111}$ | | $((2.0-\cos(\frac{2\pi}{fv}))(C_0+C_1)/2+$ $(1.0+\cos(\frac{2\pi}{fv}))(C_0+C_1+C_2+C_3)/4+$ $C_8/6+C_0/3$ | -- | -- | $(B^4_{102}+$ $B^4_{201}+$ $(C_0-$ $C_1)/3)/2$ | as case 3 |

(continued)

| Control points | | Case 0 | Case 1 | Case 2 | Case 3 | Case 4 |
|---|---|---|---|---|---|---|
| $B_{210}^4$ | $B_{012}^1$ | | as case 0 | as case 0 | as case 0 | as case 0 |
| $B_{021}^4$ | $B_{120}^3$ | | as case 0 | as case 0 | as case 0 | as case 0 |
| $B_{120}^4$ | $B_{021}^1$ | | as case 0 | as case 0 | as case 0 | as case 0 |
| $B_{030}^4$ | $B_{030}^1$ | | as case 0 | as case 0 | as case 0 | as case 0 |

γ-links, it is not necessary to search through all the information available in order to find the control points. It is sufficient to travel through the refined G-map structure until the relevant γ-link is found, and travel along the relevant edges of this coarser G-map in order to find the right data.

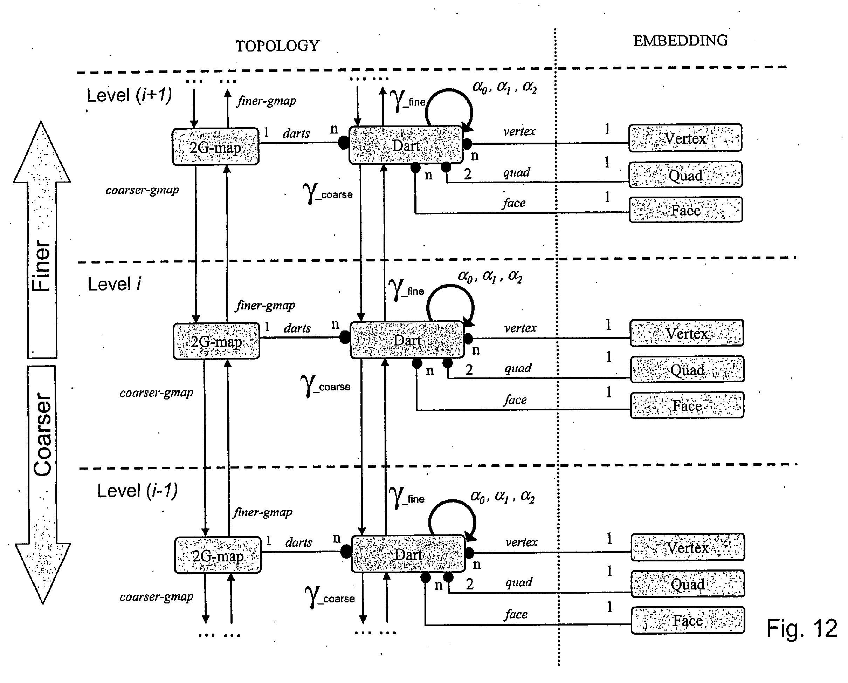

Turning now to FIG. 12, a data structure corresponding with that in FIG. 4 is shown, illustrating how the various levels are linked. It can be seen that the links between objects on the same level (the same G-map) are the same as in FIG. 4, while additional γ-links to finer and coarser G-map levels are also included. For the finest and the coarsest level, the $\gamma_{\_finer}$ and $\gamma_{\_coarser}$ links, respectively, will be null pointers.

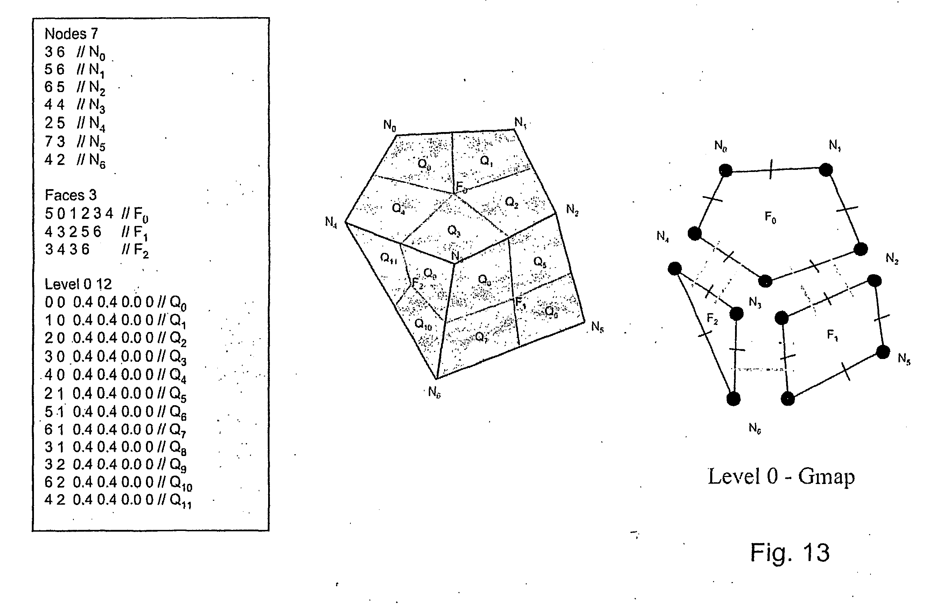

FIG. 13 illustrates the input data that is used in order to create a single level G-map in accordance with the invention. The nodes are numbered $N_0...N_6$, and for each node a coordinate is given. For the sake of simplicity, the example is two dimensional, giving only two coordinates for each node. In the same way the faces are numbered $F_0...F_2$, and for each face the number of associated nodes are given, followed by the identifying number of each such node. Finally the quads are listed, but only as parameters to be used when operating on the input data. For each quad the associated pair of node and face is given. Following that constants that represent blend ratios are given. These values are used when computing the vertices of the inner mesh. Finally the level of refinement is given. In this case all the quads belong to level 0, since no refinement has taken place.

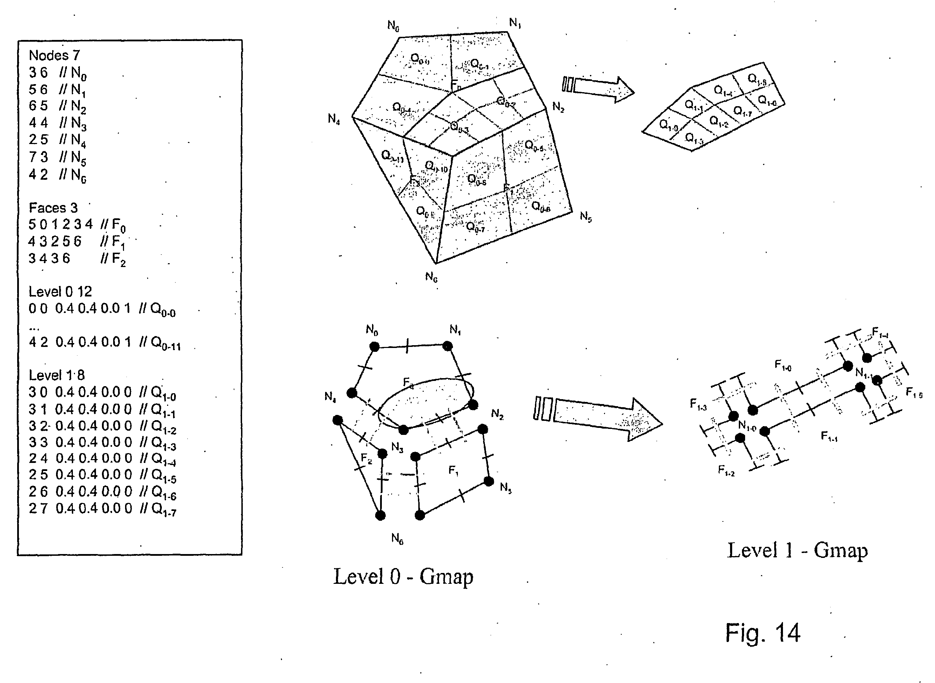

FIG. 14 shows a similar example, but here the model has been refined with an additional level. The nodes and faces are the same, and the list of quads for level 0 has been changed only in that there is an indication that this level has been refined on level 1. Following this is a list of quads for this new level. In this case, since it is quite possible that there will not be any complete faces on this level, and indeed there are none in this example, the quads do not refer to faces and nodes, but to the coarser level quad of which it is a refinement, and simply a number that is defined according to the sequence in which the quads can be found when following a 0-orbit-around the refinement point starting with the dart with which the γ-links are associated. Other ways of enumerating the quads of a refined G-map level are possible within the scope of the invention.

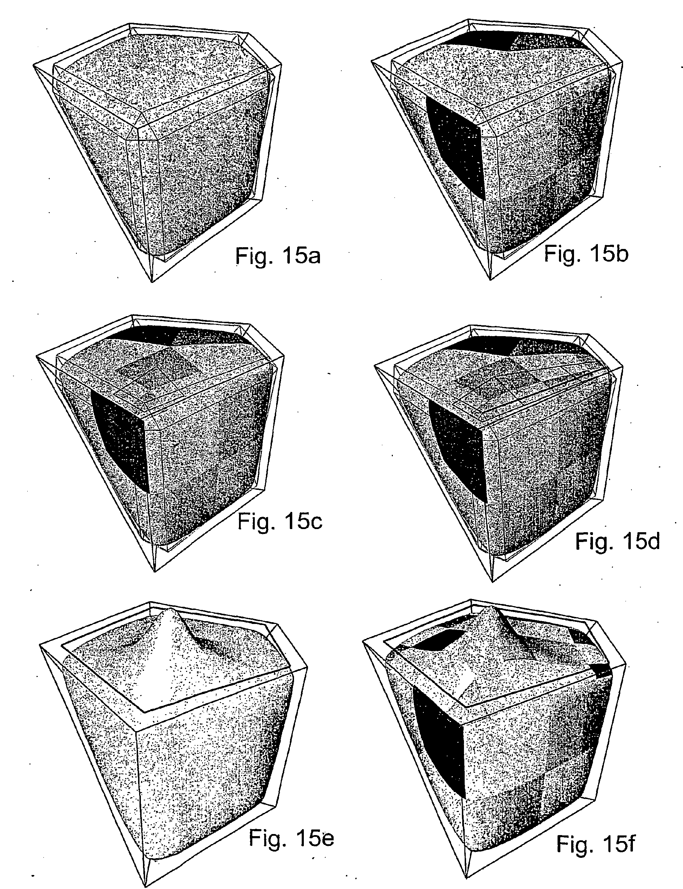

Finally, turning to FIG. 15, an example is given illustrating a screenshot of a 3D object that is being refined. In FIG 15a a 3D object is illustrated along with the outer mesh G-map and the refined inner mesh from which the control points are computed. FIG. 15b illustrates the same 3D object, but here the various patches corresponding with quads are indicated. In FIG. 15c one of the quads has been refined, and the resulting four patches on the refined level and the level 1 refined inner mesh are shown. The level 1 outer mesh G-map only consists of a vertex in the level 0 refined inner mesh, and cannot be seen in the drawing. In FIG. 15d a similar refinement has been performed on a neighboring quad, and now the level 1 outer mesh G-map can be seen in the drawing as a bold line along the refined inner mesh of level 0.

FIG. 15e illustrates a local deformation performed after the refinements have been performed, and now the outer mesh G-map of level 1 is shown as a closed bold line. FIG. 15f shows the pattern of patches of the refined and deformed model. It can be seen that one of the second level patches has been further refined by a third level G-map as indicated by the patch pattern on the local deformation.

The invention has been described in terms of a method for describing a data structure containing topological and geometric information. The method is primarily intended to be implemented on a computer system with the necessary hardware component to process and store this information and render it in the form of graphics on a display unit.

The invention may be implemented as computer software instructions stored on a computer readable medium, such as a hard drive in a computer system or in other memory on such a system, or on other computer readable medium such as a CD-ROM, a disk or any other kind of magnetic or magneto-optical storage medium. The instructions comprising the computer program may also be carried on a propagated signal.

**Claims**

1. Method for creating an irregular mesh description and an embedded geometric description in a computer graphics system, comprising:

   receiving topological input data representing vertices and faces of the mesh,
   creating a G-map representation of the topology of said mesh based on said input data,
   associating coordinates in space with the vertices of said mesh, and
   creating a geometric description from said mesh and said coordinates **characterized by** creating a refined mesh based on said first mesh and said coordinates, using coordinates associated with the vertices of said refined mesh to compute control points, and using said control points to create surface patches associated with said first mesh.

2. Method according to claim 1, wherein said refined mesh is created by applying a mesh refinement algorithm, and where each patch of said first mesh is created as a surface spline associated with a quad of said first mesh.

3. Method according to one of the previous claims, wherein the step of creating a G-map comprises the steps of creating a set of darts each associated with one vertex and one face of said first mesh; and creating a number of involutions that establish associations between pairs of darts so that an $\alpha_0$ involution links two darts associated with adjacent vertices but the same face, creating an edge, an $\alpha_1$ involution links two darts associated with the same vertex and the same face, and an $\alpha_2$ involution links two darts associated with the same vertex but adjacent faces, linking two adjacent faces.

4. Method according to one of the previous claims, wherein a local refinement of said first mesh is created by defining a second mesh corresponding with one or more quads of said first mesh, subdividing said quads of said first mesh into smaller quads of said second mesh and describing the topology of said second mesh with a second G-map representation.

5. Method according to claim 4, wherein said second G-map is linked to said first G-map through $\gamma$-links between darts on the different levels.

6. Computer system for creating an irregular mesh description and an embedded geometric description from input data, comprising:

   input interface means for receiving topological input data representing vertices and faces of the mesh,
   processing means for creating a G-map representation of the topology of said mesh based on said input data and storing said representation in-memory,
   processing means for associating coordinates in space with the vertices of said mesh and storing said coordinates in memory,
   processing means for creating a geometric description from said mesh and said coordinates **characterized by**, including processing means for creating a refined mesh based on said first mesh and said coordinates, using coordinates associated with the vertices of said refined mesh to compute control points, and using said control points to create surface patches associated with said first mesh and, and
   output interface means for outputting said geometric description for representation on a display.

7. Computer system according to claim 6, wherein said means for creating said refined mesh is capable of applying a mesh refinement algorithm, and of creating each patch of said first mesh as a surface spline associated with a quad of said first mesh.

8. Computer system according to claim 6 or 7, wherein said means for creating a G-map comprises means for creating a set of darts each associated with one vertex and one face of said first mesh; and means for creating a number of involutions that establish associations between pairs of darts so that an $\alpha_0$ involution links two darts associated with adjacent vertices but the same face, creating an edge, an $\alpha_1$ involution links two darts associated with the same vertex and the same face, and an $\alpha_2$ involution links two darts associated with the same vertex but adjacent faces, linking two adjacent faces.

9. Computer system according to one of the claims 6 to 8, further comprising processing means for creating a local refinement of said first mesh by defining a second mesh corresponding with one or more quads of said first mesh, subdividing said quads of said first mesh into smaller quads of said second mesh and describing the topology of said second mesh with a second G-map representation.

10. Computer system according to claim 9, further comprising means for creating a link between said second G-map and said first G-map through links between darts on the different levels and storing these links in memory in a way that is associated with one or both G-map.

11. Computer system according to one of the claims 6 to 10, wherein the various processing means comprises a combination of computer program instructions and general purpose hardware.

12. Computer system according to claim 11, wherein said computer program instructions are stored on a persistent memory device in said computer system.

13. Computer program product comprising computer instructions that, when executed on a computer, makes said computer capable of performing the method of one of the claims 1 to 5.

14. Computer program product according to claim 13, stored on a computer readable medium.

15. Computer program product according to claim 14, wherein said computer readable medium is a CD-ROM or DVD-ROM.

16. Computer program product according to claim 14, wherein said computer readable medium is a magnetic or magneto-optical storage medium.

17. Computer program product according to claim 13, carried on a propagated signal.

18. Method for arranging data in order to describe an irregular mesh topology and an embedded geometric description according to claim 1 comprising
creating a first data structure of a first type representing a G-map representation of a topological mesh and containing an arbitrary number of references to a second type of data structures
creating an arbitrary number of data structures of a second type representing darts of the G-map, containing references to three other data structures of said second type, said references representing $\alpha$-involutions of the G-map representation, and three references to data structures of a third, a fourth and a fifth type, respectively,
creating an arbitrary number of data structures of a third type representing vertices of the G-map, containing a reference to a data structure of a sixth type,
creating an arbitrary number of data structures of a fourth type representing quads of the G-map, containing a reference to a data structure of a seventh type,
creating an arbitrary number of data structures of a fifth type representing faces of the G-map, containing a reference to a data structure of an eight type,
creating an arbitrary number of data structures of a sixth type, being or including a variable containing the coordinates of a point in three dimensional space associated with a vertex of said G-map,
creating an arbitrary number of data structures of a seventh type, containing a description of a geometrical patch associated with a quad of said G-map, and
creating an arbitrary number of data structures of an eight type, containing a variable representing the coordinates of a point in three dimensional space associated with a face of said G-map,
wherein the creation of said data structures of the fourth type further includes creating one variable representing a vertex of a second mesh derived from the coordinates of the vertices of said first G-map mesh and one variable representing coefficients used for deriving said vertex of said second mesh from said coordinates of the vertices of said first G-map mesh, said variable representing a vertex of said second mesh and being available for computation of control points that will be used to create geometrical patches associated with said data structures of the seventh type.

19. Method according to claim 18, further comprising the creation of local refinement of said irregular mesh topology and said embedded geometric description by creating
a second data structure of said first type representing a second G-map representation of a refined topological mesh, in at least some of the data structures of the second type referred to by said first data structure of the first type, a reference to a data structure of said second type referred to by said second data structure of said first type, thus creating a reference from said first G-map representation of a topological mesh to said second G-map representation of a refined topological mesh.

**20.** Method according to claim 19, wherein at least some of the data structures of the second type contains references to two other data structures of said second type, one that is part of a G-map representation of a refined topological mesh and one that is part of a G-map representation of a coarser topological mesh.

**21.** Method according to claim 19 or 20, wherein the creation of data structures of the sixth type as part of the second G-map representation of a refined topological mesh includes storing, in the variable that is or is part of this data structure of the sixth type, the value found in the variable representing a vertex of a second mesh in an associated data structure of the fourth type in said first G-map representation of a topological mesh.

**22.** Method according to one of the claims 18-21, wherein at least some of the references contained in the data structures are empty due to incompleteness of one or more of the topological meshes.

**23.** Method according to one of the claims 18 - 22, wherein some of said data structures are included as parts of a larger data structure.

**24.** Method according to one of the claims 18-23, wherein at least some of the data structures are objects and at least some of the references are pointers.

**25.** Method according to one of the claims 18 - 24, wherein the data structures of the third, fourth and fifth type are objects that inherit characteristics from a common class.

**26.** Method according to one of the claims 18 - 25, wherein all created data structures are stored in a computer memory for access by a data processing system.

**Patentansprüche**

**1.** Verfahren zum Erzeugen einer irregulären Netzbeschreibung und einer eingebetteten geometrischen Beschreibung in einem Computer-Grafiksystem mit:

Empfangen von topologischen Eingabedaten, die Vertizes und Flächen des Netzes darstellen,
Erzeugen einer G-Kartendarstellung der Topologie des Netzes basierend auf den Eingabedaten,
Verknüpfen der Koordinaten im Raum mit den Vertizes des Netzes; und
Erzeugen einer geometrischen Beschreibung aus dem Netz und den Koordinaten, **gekennzeichnet durch** Erzeugen eines verfeinerten Netzes basierend auf dem ersten Netz und den Koordinaten unter Verwendung von Koordinaten, die mit den Vertizes des verfeinerten Netzes verknüpft sind, um Steuerpunkte zu berechnen und unter Verwendung der Steuerpunkte, um Oberflächenfelder zu erzeugen, die mit dem ersten Netz verknüpft sind.

**2.** Verfahren nach Anspruch 1, wobei das verfeinerte Netz durch Verwenden eines Netzverfeinerungs-Algorithmus erzeugt wird und wobei jedes Feld des ersten Netzes als ein Oberflächenprofil (-Spline) erzeugt wird, das mit einem Viereck des ersten Netzes verknüpft ist.

**3.** Verfahren nach einem der vorangehenden Ansprüche, wobei der Schritt eines Erzeugens einer G-Karte die Schritte eines Erzeugens eines Satzes von Pfeilen umfasst, von denen jeder mit einem Vertex und einer Fläche des ersten Netzes verknüpft ist; und eines Erzeugens einer Anzahl von Erhebungen (Involutionen), die Verknüpfungen zwischen Paaren von Pfeilen derart herstellen, dass eine $\alpha_0$-Erhebung zwei Pfeile verbindet, die mit benachbarten Vertizes jedoch der gleichen Fläche verknüpft sind, wodurch eine Kante erzeugt wird, eine $\alpha_1$-Erhebung zwei Pfeile verbindet, die mit dem gleichen Vertex und der gleichen Fläche verknüpft sind und eine $\alpha_2$-Erhebung zwei Pfeile verbindet, die mit dem gleichen Vertex jedoch benachbarter Flächen verknüpft sind, wodurch zwei benachbarter Flächen verbunden werden.

**4.** Verfahren nach einem der vorangehenden Ansprüche, wobei eine lokale Verfeinerung des ersten Netzes durch Definieren eines zweiten Netzes erzeugt wird, das einem oder mehreren Vierecken in dem ersten Netz entspricht, Unterteilen der Vierecke des ersten Netzes in kleinere Vierecke des zweiten Netzes und Beschreiben der Topologie des zweiten Netzes mit einer zweiten G-Kartendarstellung.

**5.** Verfahren nach Anspruch 4, wobei die zweite G-Karte mit der ersten G-Karte über y-Verbindungen zwischen Pfeilen auf unterschiedlichen Leveln verbunden wird.

**6.** Computersystem zum Erzeugen einer irregulären Netzbeschreibung und einer eingebetteten geometrischen Beschreibung aus Eingabedaten, mit:

einer Eingabeschnittstelle zum Empfangen topologischer Eingabedaten, die die Vertizes und Flächen des Netzes darstellen,
eine Verarbeitungsvorrichtung zum Erzeugen einer G-Kartendarstellung der Topologie des Netzes operierend auf Eingabedaten und zum Speichern der Darstellung in einem Speicher,
eine Verarbeitungsvorrichtung zum Verknüpfen von Koordinaten im Raum mit den Vertizes des Netzes und Speichern der Koordinaten in einem Speicher,
eine Verarbeitungsvorrichtung zum Erzeugen einer geometrischen Beschreibung aus dem Netz und den Koordinaten, **gekennzeichnet durch** ein Einschließen einer Verarbeitungsvorrichtung zum Erzeugen eines verfeinerten Netzes basierend auf dem ersten Netz und den Koordinaten, unter Verwendung von Koordinaten, die mit den Vertizes des verfeinerten Netzes verknüpft sind, um Steuerpunkte zu berechnen und unter Verwendung der Steuerpunkte, um Oberflächenfelder zu erzeugen, die mit dem ersten Netz verknüpft sind, und
eine Ausgabeschnittstelle zum Ausgeben der geometrischen Beschreibung zur Darstellung auf einer Anzeige.

**7.** Computersystem nach Anspruch 6, wobei die Vorrichtung zum Erzeugen des verfeinerten Netzes in der Lage ist, einen Netzverfeinerungs-Algorithmus anzuwenden und jedes Feld des ersten Netzes als ein Oberflächenprofil (-Spline) zu erzeugen, das mit einem Viereck des ersten Netzes verknüpft ist.

**8.** Computersystem nach Anspruch 6 oder 7, wobei die Vorrichtung zum Erzeugen einer G-Karte eine Vorrichtung zum Erzeugen eines Satzes von Pfeilen umfasst, von denen jeder mit einem Vertex und einer Fläche des ersten Netzes verknüpft ist; und eine Vorrichtung zum Erzeugen einer Anzahl von Erhebungen (Involutionen), die Verbindungen zwischen Paaren von Pfeilen derart herstellen, dass eine $\alpha_0$-Erhebung zwei Pfeile verbindet, die mit benachbarten Vertices jedoch der gleichen Fläche verknüpft sind, wodurch eine Kante erzeugt wird, eine $\alpha_1$-Erhebung zwei Pfeile verbindet, die mit dem gleichen Vertex und der gleichen Fläche verknüpft sind und eine $\alpha_2$-Erhebung zwei Pfeile verbindet, die mit dem gleichen Vertex jedoch benachbarten Flächen verknüpft sind, wodurch zwei benachbarte Flächen verbunden werden.

**9.** Computersystem nach einem der Ansprüche 6-8, weiter mit einer Verarbeitungsvorrichtung zum Erzeugen einer lokalen Verfeinerung des ersten Netzes durch Definieren eines zweiten Netzes, das einem oder mehreren Vierecken des ersten Netzes entspricht, Unterteilen der Vierecke des ersten Netzes in kleinere Vierecke des zweiten Netzes und Beschreiben der Topologie des zweiten Netzes mit einer zweiten G-Kartendarstellung.

**10.** Computersystem nach Anspruch 9, weiter mit einer Vorrichtung zum Erzeugen einer Verbindung zwischen der zweiten G-Karte und der ersten G-Karte durch Verbindungen zwischen Pfeilen auf unterschiedlichen Leveln und Speichern dieser Verbindungen in einem Speicher in einer Weise, die mit einer oder beiden G-Karten verknüpft ist.

**11.** Computersystem nach einem der Ansprüche 6 bis 10, wobei die unterschiedlichen Verarbeitungsvorrichtungen eine Kombination von Computerprogrammanweisungen und Allzweck-Hardware umfassen.

**12.** Computersystem nach Anspruch 11, wobei die Computerprogrammanweisungen auf einem Permanent-Speichergerät in dem Computersystem gespeichert sind.

**13.** Computerprogrammprodukt mit Computeranweisungen, die, wenn diese auf einem Computer ausgeführt werden, den Computer in die Lage versetzen, das Verfahren nach einem der Ansprüche 1 bis 5 durchzuführen.

**14.** Computerprogrammprodukt nach Anspruch 13, das auf einem Computer-lesbaren Medium gespeichert wird.

**15.** Computerprogrammprodukt nach Anspruch 14, wobei das Computer-lesbare Medium eine CD-ROM oder eine DVD-ROM ist.

**16.** Computerprogrammprodukt nach Anspruch 14, wobei das Computer lesbare Medium ein magnetisches oder magnetooptisches Speichermedium ist.

17. Computerprogrammprodukt nach Anspruch 13, das auf einem Ausbreitungssignal getragen wird.

18. Verfahren zum Anordnen von Daten, um eine irreguläre Netz-Topologie und eine eingebettete geometrische Beschreibung nach Anspruch 1 zu beschreiben, mit:

   Erzeugen einer ersten Datenstruktur eines ersten Typs, die eine G-Kartendarstellung eines topologischen Netzes darstellt und eine beliebige Anzahl von Referenzen zu einem zweiten Typ von Datenstruktur enthält,
   Erzeugen einer beliebigen Anzahl von Datenstrukturen eines zweiten Typs, die Pfeile der G-Karte darstellen, die Referenzen zu drei anderen Datenstrukturen des zweiten Typs enthalten, wobei die Referenzen $\alpha$-Erhebungen (Involutionen) der G-Kartendarstellung darstellen und drei Referenzen zu Datenstrukturen eines dritten, eines vierten bzw. eines fünften Typs,
   Erzeugen einer beliebigen Anzahl von Datenstrukturen eines dritten Typs, die Vertizes der G-Karte darstellen, die eine Referenz einer Datenstruktur eines sechsten Typs enthalten,
   Erzeugen einer beliebigen Anzahl von Datenstrukturen eines vierten Typs, die Vierecke der G-Karte darstellen, die eine Referenz zu einer Datenstruktur eines siebten Typs enthalten,
   Erzeugen einer beliebigen Anzahl von Datenstrukturen eines fünften Typs, die Flächen der G-Karte darstellen, die eine Referenz zu einer Datenstruktur eines achten Typs enthält,
   Erzeugen einer beliebigen Anzahl von Datenstrukturen eines sechsten Typs, die eine Variable sind oder diese einschließen, die die Koordinaten eines Punktes im dreidimensionalen Raum enthält, der mit einem Vertex der G-Karte verknüpft ist,
   Erzeugen einer beliebigen Anzahl von Datenstrukturen eines siebten Typs, die eine Beschreibung eines geometrischen Feldes enthalten, das mit einem Viereck der G-Karte verknüpft ist, und
   Erzeugen einer beliebigen Anzahl von Datenstrukturen eines achten Typs, die eine Variable enthalten, die die Koordinaten eines Punktes im dreidimensionalen Raum darstellt, der mit einer Fläche der G-Karte verknüpft ist,

   wobei die Erzeugung der Datenstrukturen des vierten Typs weiter ein Erzeugen einer Variablen einschließt, die einen Vertex eines zweiten Netzes darstellt, das aus den Koordinaten der Vertizes des ersten G-Kartennetzes abgeleitet ist und einer Variable, die Koeffizienten darstellt, die zum Ableiten des Vertex aus dem zweiten Netz aus den Koordinaten der Vertizes des ersten G-Kartennetzes verwendet wird, wobei die Variable einen Vertex eines zweiten Netzes darstellt und zur Berechnung von Steuerpunkten verfügbar ist, die verwendet werden, um geometrische Felder zu erzeugen, die mit den Datenstrukturen des siebten Typs verknüpft sind.

19. Verfahren nach Anspruch 18, weiter mit der Erzeugung einer lokalen Verfeinerung der irregulären Netz-Topologie und der eingebetteten geometrischen Beschreibung durch Erzeugen
   einer zweiten Datenstruktur des ersten Typs, die eine zweite G-Kartendarstellung eines verfeinerten topologischen Netzes darstellt,
   in zumindest einigen der Datenstrukturen des zweiten Typs, auf die sich von der ersten Datenstruktur des ersten Typs bezogen wird, einer Referenz zu einer Datenstruktur des zweiten Typs, auf die sich von der zweiten Datenstruktur des ersten Typs bezogen wird, wodurch eine Referenz von der ersten G-Kartendarstellung eines topologischen Netzes zu der zweiten G-Kartendarstellung eines verfeinerten topologischen Netzes erzeugt wird.

20. Verfahren nach Anspruch 19, wobei zumindest einige der Datenstrukturen des zweiten Typs Referenzen auf zwei andere Datenstrukturen des zweiten Typs enthalten, von denen eine Teil einer G-Kartendarstellung eines verfeinerten topologischen Netzes ist und eine Teil einer G-Kartendarstellung eines gröberen topologischen Netzes ist.

21. Verfahren nach Anspruch 19 oder 20, wobei die Erzeugung von Datenstrukturen des sechsten Typs als Teil der zweiten G-Kartendarstellung eines verfeinerten topologischen Netzes ein Speichern in der Variable, die diese Datenstruktur des sechsten Typs ist oder ein Teil von dieser ist, des Wertes einschließt, der in der Variable festgestellt wird, die einen Vertex eines zweiten Netzes in einer verknüpften Datenstruktur des vierten Typs in der ersten G-Kartendarstellung eines topologischen Netzes darstellt.

22. Verfahren nach einem der Ansprüche 18-21, wobei zumindest einige der Referenzen, die in den Datenstrukturen enthalten sind, auf Grund einer Unvollständigkeit von einem oder mehreren der topologischen Netze leer sind.

23. Verfahren nach einem der Ansprüche 18-22, wobei einige der Datenstrukturen als Teil einer größeren Datenstruktur eingeschlossen sind.

24. Verfahren nach einem der Ansprüche 18-23, wobei zumindest einige der Datenstrukturen Objekte sind und zumindest einige der Referenzen Zeiger sind.

25. Verfahren nach einem der Ansprüche 18-24, wobei die Datenstrukturen des dritten, vierten und fünften Typs Objekte sind, die ihre Eigenschaften von einer gemeinsamen Klasse erben.

26. Verfahren nach einem der Ansprüche 18-25, wobei alle erzeugten Datenstrukturen in einem Computerspeicher zum Zugriff von einem Daten verarbeitenden System gespeichert werden.

**Revendications**

1. Procédé pour créer une description de maillage irrégulier et une description géométrique à plongement dans un système infographique, comprenant :

   ♦ la réception de données d'entrée topologiques représentant des sommets et des faces du maillage,
   ♦ la création d'une représentation en mappe G de la topologie dudit maillage sur la base desdites donnée d'entrées,
   ♦ l'association de coordonnées dans l'espace aux sommets dudit maillage, et
   ♦ la création d'une description géométrique à partir dudit maillage et desdites coordonnées, **caractérisée par** la création d'un maillage raffiné sur la base dudit premier maillage et desdites coordonnées, en utilisant des coordonnées associées aux sommets dudit maillage raffiné pour calculer des points de contrôle, et en utilisant lesdits points de contrôle pour créer des patches de surface associées audit premier maillage.

2. Procédé selon la revendication 1, dans lequel ledit maillage raffiné est créé en appliquant un algorithme de raffinement du maillage et dans lequel chaque patch dudit premier maillage est créé comme une courbe de surface associée à un quad dudit premier maillage.

3. Procédé selon l'une quelconque des revendications précédentes, dans lequel l'étape consistant à créer une mappe G comprend les étapes consistant à créer un jeu de darts dont chacun est associé à un sommet et à une face dudit premier maillage ; et à créer un certain nombre d'involutions qui établissent des associations entre paires de darts de sorte qu'une involution $\alpha_0$ lie deux darts associés à des sommets adjacents mais à la même face, créant une arête, une involution $\alpha_1$ lie deux darts associés au même sommet et à la même face, et une involution $\alpha_2$ lie deux darts associés au même sommet, mais à des faces adjacentes, liant deux faces adjacentes.

4. Procédé selon l'une quelconque des revendications précédentes, dans lequel un raffinement local dudit premier maillage est créé en définissant un deuxième maillage correspondant à un ou plusieurs quads dudit premier maillage, subdivisant lesdits quads dudit premier maillage en quads plus petits dudit deuxième maillage et décrivant la topologie dudit deuxième maillage avec une seconde représentation en mappe G.

5. Procédé selon la revendication 4, dans lequel ladite seconde mappe G est liée à ladite première mappe G par des liaisons y entre darts sur les différents niveaux.

6. Système informatique pour créer une description de maillage irrégulier et une description géométrique à plongement à partir de données d'entrée, comprenant :

   ♦ des moyens d'interface d'entrée pour recevoir des données d'entrée topologiques représentant des sommets et des faces du maillage,
   ♦ un moyen de traitement pour créer une représentation en mappe G de la topologie dudit maillage sur la base desdites données d'entrée et pour enregistrer ladite représentation dans la mémoire,
   ♦ un moyen de traitement pour associer des coordonnées dans l'espace avec les sommets dudit maillage et enregistrer lesdites coordonnées dans la mémoire,
   ♦ un moyen de traitement pour créer une description géométrique à partir dudit maillage et desdites coordonnées, **caractérisé en ce qu'**il comprend un moyen de traitement pour créer un maillage raffiné basé sur ledit premier maillage et lesdites coordonnées, en utilisant des coordonnées associées aux sommets dudit maillage raffiné pour calculer des points de contrôle, et en utilisant lesdits points de contrôle pour créer des patches de surface associés audit premier maillage, et
   ♦ un moyen d'interface de sortie pour envoyer en sortie ladite description géométrique pour représentation sur un écran.

**7.** Système informatique selon la revendication 6, dans lequel ledit moyen pour créer ledit maillage raffiné est capable d'appliquer un algorithme de raffinement de maillage et de créer chaque patch dudit premier maillage comme une courbe de surface associée à un quad dudit premier maillage.

**8.** Système informatique selon la revendication 6 ou 7, dans lequel ledit moyen pour créer une mappe G comprend un moyen pour créer un jeu de darts, chacun étant associé à un sommet et à une face dudit premier maillage ; et un moyen pour créer un certain nombre d'involutions qui établissent des associations entre paires de darts de sorte qu'une involution $\alpha_0$ lie deux darts associés à des sommets adjacents, mais à la même face, créant une arête, une involution $\alpha_1$ lie deux darts associés au même sommet et à la même face, et une involution $\alpha_2$ lie deux darts associés au même sommet, mais à des faces adjacentes, liant deux faces adjacentes.

**9.** Système informatique selon l'une quelconque des revendications 6 à 8, comprenant en outre un moyen de traitement pour créer un raffinement local dudit premier maillage en définissant un deuxième maillage correspondant à un ou plusieurs quads dudit premier maillage, en subdivisant lesdits quads dudit premier maillage en quads plus petits dudit deuxième maillage, et en décrivant la topologie dudit deuxième maillage avec une seconde représentation en mappe G.

**10.** Système informatique selon la revendication 9, comprenant en outre un moyen pour créer une liaison entre ladite seconde mappe G et ladite première mappe G grâce à des liaisons entre darts sur les niveaux différents et en enregistrant ces liaisons dans la mémoire d'une façon qui est associée à une ou aux deux mappes G.

**11.** Système informatique selon l'une quelconque des revendications 6 à 10, dans lequel les divers moyens de traitement comprennent une combinaison d'instructions de programme informatique et du matériel universel.

**12.** Système informatique selon la revendication 11, dans lequel lesdites instructions de programme informatique sont enregistrées sur un dispositif de mémoire persistante dans ledit système informatique.

**13.** Produit de programme informatique comprenant des instructions machine qui, quand elles sont exécutées sur un ordinateur, rendent ledit ordinateur capable d'exécuter le procédé d'une des revendications 1 à 5.

**14.** Produit de programme informatique selon la revendication 13, enregistré sur un support lisible par ordinateur

**15.** Produit de programme informatique selon la revendication 14, dans lequel ledit support lisible par ordinateur est un CD-ROM ou un DVD-ROM.

**16.** Produit de programme informatique selon la revendication 14, dans lequel ledit support lisible par ordinateur est un support de stockage magnétique ou magnéto-optique.

**17.** Produit de programme informatique selon la revendication 13, porté sur un signal propagé.

**18.** Procédé pour agencer des données afin de décrire une topologie de maillage irrégulier et une description géométrique à plongement selon la revendication 1 comprenant

&#9830; la création d'une première structure de données d'un premier type représentant une représentation en mappe G d'un maillage topologique et contenant un nombre arbitraire de références à un deuxième type de structure de données,
&#9830; la création d'un nombre arbitraire de structures de données d'un deuxième type représentant des darts de la mappe G, contenant des références à trois autres structures de données dudit deuxième type, lesdites références représentant des involutions $\alpha$ de la représentation en mappe G, et trois références à des structures de données d'un troisième, quatrième et cinquième type, respectivement,
&#9830; la création d'un nombre arbitraire de structures de données d'un troisième type représentant des sommets de la mappe G, contenant une référence à une structure de données d'un sixième type,
&#9830; la création d'un nombre arbitraire de structures de données d'un quatrième type représentant des quads de la mappe G, contenant une référence à une structure de données d'un septième type,
&#9830; la création d'un nombre arbitraire de structures de données d'un cinquième type représentant des faces de la mappe G, contenant une référence à une structure de données d'un huitième type,
&#9830; la création d'un nombre arbitraire de structures de données d'un sixième type, étant ou comprenant une variable contenant les coordonnées d'un point dans l'espace tridimensionnel associé à un sommet de ladite mappe G,

♦ la création d'un nombre arbitraire de structures de données d'un septième type, contenant une description d'un patch géométrique associé à un quad de ladite mappe G, et

♦ la création d'un nombre arbitraire de structures de données d'un huitième type, contenant une variable représentant les coordonnées d'un point dans l'espace tridimensionnel associé à une face de ladite mappe G,

dans lequel la création desdites structures de données du quatrième type comprend en outre la création d'une variable représentant un sommet d'un deuxième maillage dérivé des coordonnées des sommets dudit premier maillage de mappe G et une variable représentant des coefficients utilisés pour calculer ledit sommet dudit deuxième maillage à partir desdites coordonnées des sommets dudit premier maillage de mappe G, ladite variable représentant un sommet dudit deuxième maillage et étant disponible pour le calcul des points de contrôle qui seront utilisés pour créer des patches géométriques associés auxdites structures de données du septième type.

19. Procédé selon la revendication 18, comprenant en outre la création d'un raffinement local de ladite topologie de maillage irrégulière et de ladite description géométrique à plongement en créant
une deuxième structure de données dudit premier type représentant une seconde représentation en mappe G d'un maillage topologique raffiné,
dans au moins certaines des structures de données du deuxième type auxquelles fait référence ladite première structure de données du premier type, une référence à une structure de données dudit deuxième type à laquelle fait référence ladite deuxième structure de données dudit premier type, créant ainsi une référence à partir de ladite première représentation en mappe G d'un maillage topologique à ladite seconde représentation en mappe G d'un maillage topologique raffiné.

20. Procédé selon la revendication 19, dans lequel au moins certaines des structures de données du deuxième type contiennent des références à deux autres structures de données dudit deuxième type, une qui fait partie d'une représentation en mappe G d'un maillage topologique raffiné et une qui fait partie d'une représentation en mappe G d'un maillage topologique plus grossier.

21. Procédé selon la revendication 19 ou 20, dans lequel la création de structures de données du sixième type en tant que partie de la seconde représentation en mappe G d'un maillage topologique raffiné comprend le stockage, dans la variable qui est ou fait partie de cette structure de données du sixième type, la valeur trouvée dans la variable représentant un sommet d'un deuxième maillage dans une structure de données associée du quatrième type dans ladite première représentation en mappe G d'un maillage topologique.

22. Procédé selon l'une quelconque des revendications 18 à 21, dans lequel au moins certaines des références contenues dans les structures de données sont vides du fait qu'un ou plusieurs des maillages topologiques sont incomplets.

23. Procédé selon l'une quelconque des revendications 18 à 22, dans lequel certaines desdites structures de données sont incluses en tant que parties d'une structure de données plus grande.

24. Procédé selon l'une quelconque des revendications 18 à 23, dans lequel au moins certaines des structures de données sont des objets et au moins certaines des références sont des pointeurs.

25. Procédé selon l'une quelconque des revendications 18 à 24, dans lequel les structures de données du troisième, quatrième et cinquième type sont des objets qui héritent des caractéristiques d'une classe commune.

26. Procédé selon l'une quelconque des revendications 18 à 25, dans lequel toutes les structures de données créées sont enregistrées dans une mémoire informatique à laquelle pourra accéder un système de traitement de l'information.

3D    2D

1D    0D

Fig. 1

EP 1 547 020 B1

EP 1 547 020 B1

Topological
representation

**204**

Possible
geometry

**205**

vertex V

201

202

203

: $\alpha_0$

: $\alpha_1$

: $\alpha_2$

$G = 2G\text{-map}(D, \alpha_0, \alpha_1, \alpha_2), D = \{ 1, 2, 3, ..., 24 \}$

$\alpha_0 = \{ (1, 2), (3, 4), (5, 6), (7, 8), (9, 10), (11, 12), (13, 14), (15, 16), (17, 18), (19, 20), (21, 22), (23, 24) \}$

$\alpha_1 = \{ (1, 10), (2, 3), (4, 5), (6, 7), (8, 9), (11, 18), (12, 13), (14, 15), (16, 17), (19, 24), (20, 21), (22, 23) \}$

$\alpha_2 = \{ (1, 18), (2, 17), (3), (4), (5), (6), (7), (8), (9, 20), (10, 19), (11, 24), (12, 23), (13), (14), (15), (16), (19), (21), (22) \}$

Fig. 2

An Edge

302

$\alpha_1$

303

$\alpha_2$

$\alpha_2$

$\alpha_1$    $\alpha_0$

301

A Vertex

Topological
representation

304

Possible
geometry

305

Fig. 3

TOPOLOGY

EMBEDDING

GEOMETRY

401 2G-map

402 Dart

$\alpha_0, \alpha_1, \alpha_2$

darts

Embeddings

403 Vertex

404 Quad

405 Face

vertex

quad

face

406

406 Embedding

403 Vertex — 407 Point

404 Quad — 408 Patch

405 Face — 409 Center point

Fig. 4

Fig. 5

Mesh

601

$V_L$

$V_R$

$V$

Mesh refinement

Refined mesh

$V_U = V_R - V$

$V_V = V_L - V$

patch

603

$V_0 = V + u*V_U + v*V_V + w*V_U \wedge V_V$

$V_0$

Patch structure

quad

602

Patching submesh

$C_8$

$C_1$

patch

$C_7$

$C_0$

$C_2$

$C_3$

$C_4$

$C_5$

$C_6$

604

Fig. 6

EP 1 547 020 B1

Fig. 7

Fig. 8

Case 0

Case 1

Case 2

Case 3

Case 4

Fig. 9

EP 1 547 020 B1

Fig. 10

EP 1 547 020 B1

Fig. 11

patch

Refinement

sub patches

TOPOLOGY EMBEDDING

Level (*i+1*)

finer-gmap

$\gamma_{\_fine}$ $\alpha_0, \alpha_1, \alpha_2$

2G-map 1 darts n Dart vertex 1 Vertex

n

n 2 quad 1 Quad

coarser-gmap $\gamma_{\_coarse}$ face 1 Face

Level *i*

finer-gmap

$\gamma_{\_fine}$ $\alpha_0, \alpha_1, \alpha_2$

2G-map 1 darts n Dart vertex 1 Vertex

n

n 2 quad 1 Quad

coarser-gmap $\gamma_{\_coarse}$ face 1 Face

Level (*i-1*)

finer-gmap

$\gamma_{\_fine}$ $\alpha_0, \alpha_1, \alpha_2$

2G-map 1 darts n Dart vertex 1 Vertex

n

n 2 quad 1 Quad

coarser-gmap $\gamma_{\_coarse}$ face 1 Face

... ... ... ...

Finer

Coarser

Fig. 12

EP 1 547 020 B1

EP 1 547 020 B1

```
Nodes 7
3 6    // N₀
5 6    // N₁
6 5    // N₂
4 4    // N₃
2 5    // N₄
7 3    // N₅
4 2    // N₆

Faces 3
5 0 1 2 3 4   // F₀
4 3 2 5 6     // F₁
3 4 3 6       // F₂

Level 0 12
0 0  0.4 0.4 0.0 0 // Q₀
1 0  0.4 0.4 0.0 0 // Q₁
2 0  0.4 0.4 0.0 0 // Q₂
3 0  0.4 0.4 0.0 0 // Q₃
4 0  0.4 0.4 0.0 0 // Q₄
2 1  0.4 0.4 0.0 0 // Q₅
5 1  0.4 0.4 0.0 0 // Q₆
6 1  0.4 0.4 0.0 0 // Q₇
3 1  0.4 0.4 0.0 0 // Q₈
3 2  0.4 0.4 0.0 0 // Q₉
6 2  0.4 0.4 0.0 0 // Q₁₀
4 2  0.4 0.4 0.0 0 // Q₁₁
```

Level 0 - Gmap

Fig. 13

```
Nodes 7
3 6    // N₀
5 6    // N₁
6 5    // N₂
4 4    // N₃
2 5    // N₄
7 3    // N₅
4 2    // N₆

Faces 3
5 0 1 2 3 4   // F₀
4 3 2 5 6     // F₁
3 4 3 6       // F₂

Level 0 12
0 0  0.4 0.4 0.0 1  // Q₀₋₀
...
4 2  0.4 0.4 0.0 1  // Q₀₋₁₁

Level 1 8
3 0  0.4 0.4 0.0 0  // Q₁₋₀
3 1  0.4 0.4 0.0 0  // Q₁₋₁
3 2  0.4 0.4 0.0 0  // Q₁₋₂
3 3  0.4 0.4 0.0 0  // Q₁₋₃
2 4  0.4 0.4 0.0 0  // Q₁₋₄
2 5  0.4 0.4 0.0 0  // Q₁₋₅
2 6  0.4 0.4 0.0 0  // Q₁₋₆
2 7  0.4 0.4 0.0 0  // Q₁₋₇
```

Level 0 - Gmap

Level 1 - Gmap

Fig. 14

Fig. 15a

Fig. 15b

Fig. 15c

Fig. 15d

Fig. 15e

Fig. 15f

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JÖRG PETERS.** Biquadratic C1-surface splines over irregular meshes. *Computer Aided Design,* December 1995, vol. 27 (12), 895-903
- **DAVID FORSEY.** *Hierarchical B-splines, http://www.cs.ubc.ca/nest/imager/contributions/forsey/dragon/hbsplines.html*
- **BRUNO LEVY ; JEAN-LAURENT MALLET.** *Cellular Modeling in Arbitrary Dimension using Generalized Maps,* 05 January 2001, 1-11
- **VERONIQUE LANG ; PASCAL LIENHARDT.** Simplical Sets and Triangular Patches. *Proceedings of Computer Graphics International,* 24 June 1996, 154-163
- **E. CATMULL ; J. CLARK.** Recursively generated B-spline surfaces on arbitrary topological surfaces. *Computer-Aided Design,* November 1978, vol. 10 (6), 350-355
- Generalized maps in geological modeling: Object-oriented design of topological kernels. **Y. HALBWACHS ; Ø. HJELLE.** Advances in Software Tools for Scientific Computing. Springer, 1999, 339-356
- **GERALD FARIN.** Curves and Surfaces for CAGD. Morgan Kaufman Publishing, 2001